# EUROPEAN PATENT APPLICATION

(11) **EP 4 372 534 A1**
(43) Date of publication of application: **22.05.2024**
(21) Application number: 22868987.3
(22) Date of filing: 24.08.2022
(51) Int. Cl.: G06F 3/0481

(54) **HUMAN-MACHINE INTERACTION METHOD, COMPUTER-READABLE MEDIUM, AND ELECTRONIC DEVICE**

(30) Priority: 14.09.2021 CN 202111076012
(71) Applicant: Huawei Technologies Co., Ltd., Shenzhen, Guangdong 518129 (CN)
(72) Inventor: YANG, Wanyi, Shenzhen, Guangdong 518129 (CN); CHEN, Feng, Shenzhen, Guangdong 518129 (CN)
(74) Representative: Epping - Hermann - Fischer
(86) International application number: PCT/CN2022/114608
(87) International publication number: WO 2023/040613

(57) **Abstract**

This application relates to the field of communication technologies, and discloses a human-computer interaction method, a readable medium, and an electronic device. The human-computer interaction method includes: disposing a corresponding display model for each display element on a display interface. The display model may be represented as a matrix or a variable. When a user performs an operation on an icon or a card, the electronic device adjusts a corresponding display model based on a type of a touch operation, to change display effect of the display model. The electronic device maps the display model whose display effect is changed to a canvas used for drawing an icon, and an icon on a display interface of the electronic device changes corresponding to the user operation. In the human-computer interaction method, the display element can be displayed based on an adjusted display model. Therefore, the user can fully, sensitively, and accurately interact with the display element. This reduces a sense of freezing during interaction between the user and the display element, improves a sense of smoothness during the interaction between the user and the display element, and improves user experience.

## Description

This application claims priority to Chinese Patent Application No. 202111076012.9, filed with the China National Intellectual Property Administration on September 14, 2021 and entitled "HUMAN-COMPUTER INTERACTION METHOD, COMPUTER-READABLE MEDIUM, AND ELECTRONIC DEVICE", which is incorporated herein by reference in its entirety.

### TECHNICAL FIELD

The present invention relates to the field of communication technologies, and in particular, to a human-computer interaction method, a computer-readable medium, and an electronic device.

### BACKGROUND

After applications are installed on a terminal device, corresponding icons are displayed on a display interface of the terminal device. With development of terminal devices, performance of the terminal devices is continuously improved, and storage space of the terminal devices is rapidly increased. For example, the terminal device is a mobile phone. More and more applications are installed on the mobile phone by a user, and a plurality of icons are displayed on a display interface of the mobile phone.

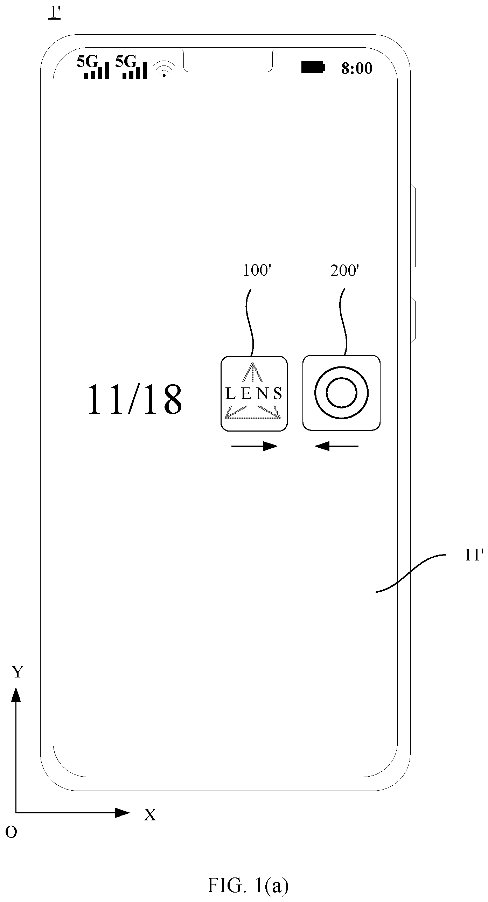

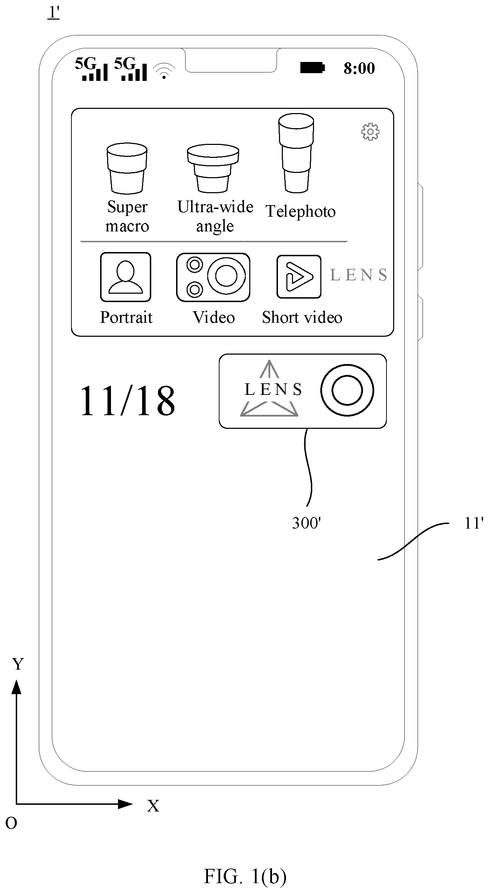

In some technical solutions, for icons on the display interface of the mobile phone, a display manner of each icon is preset. Even if the user can perform a related operation on two specific icons (for example, a camera and a lens package), for example, as shown in FIG. 1(a) and FIG. 1(b), the user combines a lens icon 100' and a camera icon 200' through a touch operation to obtain a lens camera icon 300', the lens camera icon 300' is actually an icon that is pre-generated and stored in the mobile phone based on the lens icon 100' and the camera icon 200'.

Based on this, currently, display manners of the icons on the display interface of the mobile phone are all preset manners, and a human-computer interaction process based on the touch operation of the user is essentially invocation and display of the icons. The mobile phone cannot flexibly and accurately adjust the icons on the display interface based on the touch operation of the user. Consequently, the display manners of the icons are simple, playability of the icons is poor, and human-machine interaction experience is poor.

### SUMMARY

This application discloses a human-computer interaction solution: A display model may be represented as a matrix or a variable. When a user performs an operation on an icon or a card, an electronic device adjusts a corresponding display model based on a type of a touch operation, to change display effect of the display model. The electronic device maps the display model whose display effect is changed to a canvas used for drawing an icon, and an icon on a display interface of the electronic device changes corresponding to a user operation. In the human-computer interaction method, a display element can be displayed based on an adjusted display model, and display effect is adjusted based on an adjustment variable that is flexibly changed in real time. Therefore, in this application, the user can fully, sensitively, and accurately interact with the display element. This reduces a sense of freezing during interaction between the user and the display element, improves a sense of smoothness during the interaction between the user and the display element, and improves user experience.

A first aspect of this application provides a human-computer interaction method. The method can be applied to an electronic device, and includes: obtaining a touch operation performed by a user on at least one display element displayed on the electronic device; adjusting, based on a type of the touch operation, display effect of at least one display model of the at least one display element to which the touch operation is applied; and changing, based on the display model whose display effect is adjusted, display effect of the display element corresponding to the display model on the electronic device.

The electronic device may be a device having a display, such as a mobile phone or a tablet. The display element may be at least one of elements, such as an icon, a card, a widget, and an assembly, that are displayed on a display interface of the electronic device. The display interface may be a display desktop of the electronic device, or may be an application interface corresponding to an application. The touch operation is an operation formed when the user touches an adjustment interface. The type of the touch operation means an adjustment manner of a display element corresponding to the touch operation of the user. For example, the type of the touch operation includes adjusting a display direction of a single display element, adjusting, in batches, display directions of display elements, using one display element to cover another display element, exchanging display locations of two display elements, adjusting sizes of two display elements, or the like. The display effect includes a display location, a display size, a display direction, a display color, display content, a display detail, and the like of the display element. The display model is data corresponding to the display element, and the display model may be a two-dimensional model or a three-dimensional model.

That is, in an implementation of this application, the electronic device obtains the touch operation performed by the user on the at least one display element, the electronic device obtains, by using a touch sensor, touch data generated by the touch operation performed by the user on the display element and extracts touch parameters from the touch data, and the electronic device determines the type of the touch operation by using the touch parameters according to a preset rule. The electronic device determines adjustment parameters and adjustment variables of each sub-display element in the display element based on the touch parameters and the type of the touch operation. The electronic device correspondingly adjusts display effect of a corresponding model based on the adjustment parameters and the adjustment variables of the sub-display element in the display element to correspondingly adjust the sub-display element in the display element, and obtains an adjusted display element based on an adjusted sub-display element. Finally, the electronic device hides the original display element, and displays an updated display element.

In an implementation, an adjustment solution for the display element may be used to adjust display effect of at least one display element in one display element displayed on the electronic device.

In an implementation, the adjustment solution for the display element may be further used to simultaneously adjust display effect of at least two display elements in the at least one display element displayed on the electronic device. The two display elements may be two display elements corresponding to a same application, or may be two display elements corresponding to two applications. A display direction adjustment of the display elements includes directly adjusting the display directions of the display elements separately or in batches based on the touch operation, and does not include that the display elements follow or inherit a display direction of another display element.

In addition, when the touch operation of the user is separately adjusting a display direction of one display element, it is very likely that the user wants to remain the display direction of the display element in a fixed direction. Moreover, when the touch operation of the user is adjusting, in batches, a plurality of display elements, it is very likely that the user wants to remain display locations corresponding to the plurality of display elements in fixed display directions. After a display direction of a single display element is adjusted by using the human-computer interaction solution, this application further includes a human-computer interaction solution for two or more display elements. For example, one card corresponding to an application covers another card corresponding to the same application. For another example, locations of two display elements are exchanged. For another example, display sizes of two adjacent display elements are adjusted.

It may be understood that, based on the adjustment effect actually generated by the foregoing separate adjustment and batch adjustment, it can be learned that, in the touch operation in this application, both a manner of last display direction adjustments of the two or more display elements and a sequence of the last display direction adjustments of the two or more display elements affect display effect of the two or more display elements after the touch operation.

For example, in the two or more display elements, a display element whose display direction is last adjusted has a highest priority, and priorities of the display elements are sequentially decreased in a reverse order of the adjustment sequence. Specifically, when the last display direction adjustment is a separate adjustment for a first display element, and the first display element is adjusted to another display location, the display direction of the first display element always remains unchanged. When the last display direction adjustment is a batch adjustment for a second display element and another display element, and the another element is adjusted to a location of the second display element, a display direction of the second display element continues to be used. Based on this, the following describes a human-computer interaction solution for two or more display elements.

In the human-computer interaction method, the touch operation of the user is received to determine the type of the touch operation performed by the user on the display element, to flexibly adjust the display effect of the display element based on the type of the touch operation and touch parameters corresponding to the specific touch operation. The display element can be displayed based on the adjusted display model, and the display effect is adjusted based on the adjustment variable that is flexibly changed in real time. Therefore, in this application, the user can fully, sensitively, and accurately interact with the display element. This reduces a sense of freezing during interaction between the user and the display element, improves a sense of smoothness during the interaction between the user and the display element, and improves user experience.

In a possible implementation of the first aspect, at least one piece of display effect in the human-computer interaction method includes at least one of the display location, the display size, the display direction, the display color, the display content, and the display detail of the display element.

The display location is a location of each sub-display element in the display element. That is, the display location includes a location of the display element and a relative location of each sub-display element in the display element. The display size is a size of each sub-display element in the display element, and the display size may be a distance from each sub-display element to a boundary of the canvas. The display direction means an orientation of the display element. For example, when the display element is parallel to a display, the display direction of the display element is forward. When a left side of the display element is forward and a right side is backward, the display direction of the display element is rightward. When the left side of the display element is backward and the right side is forward, the display direction of the display element is leftward. When an upper side of the display element is forward and a lower side is backward, the display direction of the display element is downward. When the upper side of the display element is backward and the lower side is forward, the display direction of the display element is upward. In the human-computer interaction method, there are various types of display effect of the display element, so that various requirements of the user can be met.

In a possible implementation of the first aspect, the human-computer interaction method further includes: determining the type of the touch operation according to the preset rule, where the preset rule is set based on a quantity of the at least one display element, whether the at least one display element corresponds to a same application, and the touch operation.

That is, in an implementation of this application, the preset rule is pre-stored in the electronic device, and is used to determine the type of the touch operation based on the touch parameters corresponding to the touch operation. The preset rule includes: When an initial location and an end location of the touch operation of the user are located on a same display element, the type of the touch operation is adjusting a display direction of a single display element. When the initial location of the touch operation of the user is located in an area in which one display element corresponding to one application is located, and the end location of the touch operation of the user is located on another display element corresponding to the same application, the type of the touch operation is using one display element to cover and replace the another display element. When the initial location of the touch operation of the user is located in an area in which one display element is located, the end location of the touch operation of the user is located on another adjacent display element, and the end location crosses a center line of the another display element, the type of the touch operation is exchanging display locations of the two connected display elements. When the initial location of the touch operation of the user is located in a middle area of two adjacent display elements, and the end location of the touch operation of the user is located on one of the display elements, the type of the touch operation is adjusting sizes of the two display elements.

In the human-computer interaction method, the type of the touch operation may be determined based on the quantity of the at least one display element, whether the at least one display element corresponds to the same application, and the touch operation. A determining manner is simple, and a determining periodicity is short.

In a possible implementation of the first aspect, in the foregoing human-computer interaction method, the obtaining a touch operation performed by a user on at least one display element displayed on the electronic device includes: when the user selects to adjust display effect of a plurality of display elements, the touch operation is used to simultaneously adjust the display effect of the plurality of selected display elements. For example, after the display effect of the plurality display elements is adjusted, 3D stereoscopic effect of the display elements may be implemented, to implement naked-eye 3D effect.

The touch operation of the user may be used to enable the electronic device to be set based on a location that is of the display element and that is on the display interface of the electronic device and a reference location set by the user, and is used to adjust the display element to face the reference location. The touch operation of the user is used to generate an automatic control instruction, and the automatic control instruction can implement an adjustment of at least one display element without requiring the user to provide specific touch data.

In the human-computer interaction method, the electronic device may simultaneously adjust the display effect of the plurality of display elements through the touch operation, so that efficiency of adjusting the display element is high, and an operation is convenient.

In a possible implementation of the first aspect, in the human-computer interaction method, the adjusting, based on a type of the touch operation, display effect of at least one display model of the at least one display element to which the touch operation is applied includes: performing, in batches, different display effect adjustments on display models of at least two display elements in the plurality of display elements based on the type of the touch operation.

In the human-computer interaction method, the electronic device may simultaneously perform different display effect adjustments on the plurality of display elements through the touch operation, to implement the different display effect adjustments of the plurality of display elements. The operation is convenient, and an adjustment requirement of the user for the display element is further met.

In a possible implementation of the first aspect, in the human-computer interaction method, performing different display effect adjustments on the display models of the at least two display elements in the plurality of display elements includes: determining, based on the touch operation of the user and a display location of each of the at least two display elements, a sub-touch operation performed by the user on each display element; and determining a rotation axis, a rotation direction, and a rotation angle of each display element based on the sub-touch operation, and adjusting, in batches and in correspondence to the touch operation, the display direction of each display element based on the determined rotation axis, rotation direction, and rotation angle of each display element. In a possible implementation of the first aspect, in the human-computer interaction method, the adjusting, based on a type of the touch operation, display effect of at least one display model of the at least one display element to which the touch operation is applied includes: performing, in batches, a same display direction adjustment on a plurality of display models of the plurality of display elements based on the type of the touch operation.

In a possible implementation of the first aspect, in the human-computer interaction method, the operation type includes using the first display element to cover the second display element. The first display element and the second display element correspond to a same application. The using the first display element to cover the second display element includes: using, in the first display element, second at least partial display effect of the second display element, and hiding the second display element. The second at least partial display effect includes a second display location and a second display size of the second display element.

In a possible implementation of the first aspect, in the human-computer interaction method, when the type of the touch operation performed on the second display element is adjusting, in batches, the display direction, the second at least partial display effect further includes a second display direction of the second display element.

In a possible implementation of this application, an application scenario is that a last display direction adjustment of an original display element is performed after a last display direction adjustment of a new display element, and a manner of the last display direction adjustment of the original display element is a batch adjustment. The user drags one new display element corresponding to one application to another original display element corresponding to the same application. On the display interface, the dragged new display element covers the original display element, and a display direction of the original display element continues to be used for the new display element after coverage.

It may be understood that the display direction adjustment of the display elements includes directly adjusting the display directions of the display elements separately or in batches based on the touch operation, and does not include that the display elements follow or inherit a display direction of another display element.

In a possible implementation of the first aspect, in the human-computer interaction method, the adjusting, based on a type of the touch operation, display effect of at least one display model of the at least one display element to which the touch operation is applied includes: obtaining the second display element corresponding to the touch operation of the user; and adjusting a display model of the first display element based on the at least partial display effect of the second display element, hiding, in correspondence to the touch operation, the second display element, and adjusting the display effect of the first display element by using the adjusted display model.

That is, in an implementation of this application, the electronic device invokes an invalid function to implement an interactive animation between the display element and an updated display element. In a possible implementation of the first aspect, in the human-computer interaction method, the type of the touch operation includes exchanging display locations of a third display element and a fourth display element. When the type of a latest touch operation performed on the third display element is adjusting, in batches, a display direction, the exchanging display locations of a third display element and a fourth display element includes: using, in the third display element, fourth at least partial display effect of the fourth display element, and using, in the fourth display element, third at least partial display effect of the third display element, where the fourth at least partial display effect includes a fourth display location of the fourth display element, and the third at least partial display effect includes a third display location and a third display direction of the third display element.

In an implementation of this application, in the two or more display elements, a display element whose display direction is last adjusted has a highest priority, and priorities of the display elements are sequentially decreased in a reverse order of the adjustment sequence. Specifically, when the last display direction adjustment is a separate adjustment for the first display element, and the first display element is adjusted to another display location, the display direction of the first display element always remains unchanged. When the last display direction adjustment is a batch adjustment for the second display element and another display element, and the another element is adjusted to a location of the second display element, the display direction of the second display element continues to be used. Based on this, the following describes the human-computer interaction solution for the two or more display elements.

In an implementation of this application, a manner of a last display direction adjustment of the fourth display element is the separate adjustment, a manner of a last display direction adjustment of the third display element is the batch adjustment, and locations of the fourth display element and the third display element are exchanged with each other. When the last display direction adjustment of the fourth display element is earlier than the last display direction adjustment of the third display element, the display direction of the third display element follows the display direction of the fourth display element after a location exchange, and the display direction of the third display element after the location exchange remains unchanged.

In a possible implementation of the first aspect, in the human-computer interaction method, the type of the touch operation includes exchanging display locations of a third display element and a fourth display element. When a type of a latest touch operation performed on the third display element and a type of a latest touch operation performed on the fourth display element are both adjusting, in batches, display directions, the exchanging display locations of a third display element and a fourth display element includes: using, in the third display element, fourth at least partial display effect of the fourth display element, and using, in the fourth display element, third at least partial display effect of the third display element, where the third at least partial display effect includes a third display location and a third display direction of the third display element, and the fourth at least partial display effect includes a fourth display location and a fourth display direction of the fourth display element.

In an implementation of this application, an application scenario to which the human-computer interaction solution is applicable is that both manners of a last display direction adjustment of the third display element and a last display direction adjustment of the fourth display element are batch adjustments, and are not limited to a same batch adjustment. In this case, the third display element after a location exchange follows the display direction of the original fourth display element, and the fourth display element after the location exchange follows the display direction of the original third display element.

In the foregoing solution, a display direction and a display location of an original display element continue to be used for a display element after an exchange. That is, in a process of exchanging locations of the display elements, it is ensured that display elements at a same location on the display interface of the electronic device are always displayed in a same display direction, so that a display direction that is of naked-eye 3D effect and that meets a use habit of a user is maintained, and the steps of adjusting a display element on the display interface of the electronic device are further simplified.

In a possible implementation of the first aspect, in the human-computer interaction method, the type of the touch operation includes synchronously adjusting display effect of a fifth display element and a sixth display element. The fifth display element and the sixth display element are adjacently displayed on the electronic device. The synchronously adjusting display effect of a fifth display element and a sixth display element includes: synchronously adjusting a fifth display size of the fifth display element and a sixth display size of the sixth display element based on the touch operation, where a sum of the fifth display size and the sixth display size remains unchanged.

In the foregoing solution, the user performs the touch operation in an area between two adjacent display elements, so that sizes and display directions of two display elements can further be dynamically adjusted in real time, to improve smoothness in a process of changing display manners of the two display elements, and implement diversity of display effect of the two display elements. In a possible implementation of the first aspect, in the human-computer interaction method, the synchronously adjusting display effect of a fifth display element and a sixth display element further includes: adjusting fifth display content of the fifth display element and/or display content of the sixth display element based on the touch operation.

In a possible implementation of the first aspect, in the human-computer interaction method, when a size that is of the fifth display element and that is adjusted based on a fifth adjustment size is a minimum display size, the synchronously adjusting display effect of a fifth display element and a sixth display element further includes adjusting a fifth display direction of the fifth display element. The fifth adjustment size may be a difference between an original display size and an adjusted display size that are of the fifth element.

In an implementation of this application, when the display element on the display interface of the electronic device is adjusted from another size to a minimum unit size, the display direction of the display element is adjusted to face the front side by default. It may be understood that although the display direction of the display element is adjusted to face the front side, it is still considered that the display element is a display element whose display direction has been adjusted.

In a possible implementation of the first aspect, the human-computer interaction method further includes: during the touch operation of the user, obtaining a corresponding fifth real-time size and a corresponding sixth real-time size based on a touch location of the user, where a sum of the fifth real-time size and the sixth real-time size remains unchanged; and adjusting the display effect of the fifth display element in real time based on the fifth real-time size, and adjusting the display effect of the sixth display element in real time based on the sixth real-time size.

In a possible implementation of the first aspect, in the human-computer interaction method, the changing, based on the display model whose display effect is adjusted, display effect of the display element corresponding to the display model on the electronic device includes: drawing, by using a canvas, the display model whose display effect is adjusted, to change the display effect of the display element corresponding to the display model on the electronic device. The canvas is abstract space in which the display element can be arranged and rendered based on the display model.

In a possible implementation of the first aspect, in the human-computer interaction method, the type of the touch operation includes adjusting a display direction of the display element. The adjusting a display direction of the display element includes determining a rotation axis, a rotation direction, and a rotation angle of the display element.

In a possible implementation of the first aspect, in the human-computer interaction method, the adjusting, based on a type of the touch operation, display effect of at least one display model of the at least one display element to which the touch operation is applied includes: determining a rotation axis, a rotation direction, and a rotation angle of the display model of the display element based on the touch operation of the user, and adjusting, in correspondence to the touch operation, the display direction of the display element based on the determined rotation axis, rotation direction, and rotation angle.

In a possible implementation of the first aspect, in the human-computer interaction method, the at least one display element includes at least one of an icon, a card, and a widget.

In a possible implementation of the first aspect, in the human-computer interaction method, each of the at least one display element includes a foreground element and a background element. The method further includes: adjusting, based on the type of the touch operation, display effect of a foreground element and/or a background element corresponding to at least one sub-display element in the at least one display element to which the touch operation is applied.

In a possible implementation of the first aspect, in the human-computer interaction method, the display model includes at least one of a two-dimensional display model and a three-dimensional display model. The two-dimensional display model can display a planar shape of a display element such as an icon or a card, the three-dimensional display model can display a stereoscopic shape of the display element such as the icon or the card, and the display model may be represented by using a matrix or a variable.

A second aspect of this application provides a computer-readable medium, where the computer-readable medium stores instructions. When the instructions are executed on an electronic device, the electronic device is enabled to perform any human-computer interaction method in the first aspect.

A third aspect of this application provides an electronic device, including: a memory, configured to store instructions executed by one or more processors of the electronic device; and a processor that is one of processors of the electronic device and that is configured to perform any human-computer interaction method in the first aspect.

### BRIEF DESCRIPTION OF DRAWINGS

FIG. 1(a) shows a display interface 11' of a mobile phone 1';
FIG. 1(b) shows a display interface 11' of a mobile phone 1' after a user operation;
FIG. 2 shows a display interface 11 of a mobile phone 1 according to this application;
FIG. 3(a) shows a touch operation performed by a user on a camera icon 104 according to this application;
FIG. 3(b) is a partial enlargement view of an area i on a display interface 11 of a mobile phone 1 according to this application;
FIG. 4(a) shows other two types of touch operations performed by a user on an icon in an area i on a display interface 11 according to this application;
FIG. 4(b) is a partial enlargement view of an area i on a display interface 11 of a mobile phone 1 according to this application;
FIG. 5(a) shows a display interface 11" of a mobile phone 1";
FIG. 5(b) shows a display interface 11" of a mobile phone 1" after a user operation;
FIG. 6(a) shows a touch operation performed by a user on a contact B card and a contact A card according to this application;
FIG. 6(b) is a partial enlargement view of an area ii on a display interface 11 of a mobile phone 1 according to this application;
FIG. 6(c) shows a touch operation performed by a user on a contact C card and a contact A card according to this application;
FIG. 6(d) is a partial enlargement view of an area ii on a display interface 11 of a mobile phone 1 according to this application;
FIG. 7(a) shows a touch operation performed by a user on an alarm card and a remote control card according to this application;
FIG. 7(b) is a partial enlargement view of an area ii on a display interface 11 of a mobile phone 1 according to this application;
FIG. 8(a) shows a touch operation performed by a user on a remote control card and an alarm card according to this application;
FIG. 8(b) is a partial enlargement view of an area ii on a display interface 11 of a mobile phone 1 according to this application;
FIG. 9(a) is a principle diagram of generating a card in a mobile phone 1 according to this application;
FIG. 9(b) is a schematic diagram of drawing a background element of a card according to this application;
FIG. 9(c) is a schematic diagram of drawing a foreground element and a text element of a card according to this application;
FIG. 9(d) is a principle diagram of displaying a card in a mobile phone 1 according to this application;
FIG. 10 is a schematic diagram of a card update principle according to this application;
FIG. 11 is a flowchart of a human-computer interaction solution for a display element of a mobile phone 1 according to this application;
FIG. 12(a) is a schematic diagram of a camera icon 104 displayed on a display interface 11 of a mobile phone 1 according to this application;
FIG. 12(b) is a schematic diagram of a touch trajectory of a user on a display interface 11 of a mobile phone 1 according to this application;
FIG. 12(c) is a schematic diagram of another touch trajectory of a user on a display interface 11 of a mobile phone 1 according to this application;
FIG. 12(d) is a schematic diagram of still another touch trajectory of a user on a display interface 11 of a mobile phone 1 according to this application;
FIG. 13(a) to FIG. 13(j) are schematic diagrams of adjusting a camera icon 104 in a mobile phone 1 on an adjustment interface 12 based on different adjustment parameters according to this application;
FIG. 13(k) is a schematic diagram of locking an adjusted camera icon 104 in a mobile phone 1 according to this application;
FIG. 13(l) is a schematic diagram of an adjusted camera icon 104 in a mobile phone 1 according to this application;
FIG. 14(a) is a schematic diagram of entering a batch adjustment for icons on an adjustment interface 12 of a mobile phone 1 according to this application;
FIG. 14(b) is a schematic diagram of selecting icons from an adjustment interface 12 of a mobile phone 1 for a batch adjustment according to this application;
FIG. 14(c) is a schematic diagram of a batch adjustment operation performed on icons on an adjustment interface 12 of a mobile phone 1 according to this application;
FIG. 14(d) is a schematic diagram when a batch adjustment of icons on an adjustment interface 12 of a mobile phone 1 is confirmed according to this application;
FIG. 14(e) is a schematic diagram after icons of a mobile phone 1 are adjusted in batches according to this application;
FIG. 14(f) is another schematic diagram when a batch adjustment of icons on an adjustment interface 12 of a mobile phone 1 is confirmed according to this application;
FIG. 14(g) is another schematic diagram after icons of a mobile phone 1 is adjusted in batches according to this application;
FIG. 15(a) to FIG. 15(d) are schematic diagrams when sizes of a card 100 and a card 200 in a mobile phone 1 are adjusted according to this application;
FIG. 16 is a schematic diagram of a structure of a mobile phone 1 according to this application; and
FIG. 17 is a block diagram of a software structure of a mobile phone 1 according to this application.

### DESCRIPTION OF EMBODIMENTS

Illustrative embodiments of this application include but are not limited to a human-computer interaction method, an apparatus, a readable medium, and an electronic device. The following describes technical solutions in embodiments of this application with reference to accompanying drawings in embodiments of this application.

It may be understood that the electronic device in this application may be a device having a display, such as a mobile phone or a tablet. The following uses an example in which the electronic device is a mobile phone for description. A display element may be any element displayed on a display interface of the mobile phone, for example, at least one of elements such as an icon, a sub-icon, a card, a widget, and an assembly. An application corresponding to the display element may be a program such as "Contacts", "Phone", "Messaging", "Browser", "Alarm", or "Remote Control". In addition, for ease of description, a width direction of a mobile phone screen is set as an X axis, a length direction of the mobile phone screen is set as a Y axis, a thickness direction of the mobile phone is set as a Z axis, and the X axis, the Y axis, and the Z axis are perpendicular to each other. A left side of the mobile phone and a right side of the mobile phone are two sides of the mobile phone in an X-axis direction. An upper side of the mobile phone and a lower side of the mobile phone are two sides of the mobile phone in a Y-axis direction. A front side of the mobile phone and a rear side of the mobile phone are two sides of the mobile phone in a Z-axis direction.

To resolve the foregoing problem, this application discloses a human-computer interaction solution for a display element on a display interface of a mobile phone. A corresponding display model is set for the display element, such as each icon or each card, on the display interface. The display model may include a two-dimensional display model and/or a three-dimensional display model. The two-dimensional display model can display a planar shape of a display element such as an icon or a card, the three-dimensional display model can display a stereoscopic shape of the display element such as the icon or the card, and the display model may be represented by using a matrix or a variable. Then, when a user performs an operation on the icon or the card, the mobile phone changes a corresponding display model based on a type of a touch operation. For example, when the user operation is rotating a single icon, the mobile phone rotates the display model to change a display angle of the display model. Then, the changed display model is mapped to a canvas used for drawing the icon. In this way, the icon on the display interface of the mobile phone changes corresponding to the user operation. The canvas is abstract space in which the display element can be arranged and rendered based on the display model.

It may be understood that different types of touch operations correspond to different adjustment manners, and different adjustment manners correspond to different adjustment parameters. The mobile phone obtains adjustment variables of adjustment parameters based on the touch operation, and then adjusts the adjustment parameters based on the adjustment variables, so that the display model is displayed based on adjusted adjustment parameters, to finally complete one time of interaction between the user and the display element.

In the human-computer interaction method, the touch operation of the user is received to determine the type of the touch operation performed by the user on the display element, to flexibly adjust display effect of the display element based on the type of the touch operation and touch parameters corresponding to the specific touch operation. The display element can be displayed based on the adjusted display model, and the display effect is adjusted based on the adjustment variable that is flexibly changed in real time. Therefore, in this application, the user can fully, sensitively, and accurately interact with the display element. This reduces a sense of freezing during interaction between the user and the display element, improves a sense of smoothness during the interaction between the user and the display element, and improves user experience.

To facilitate understanding of the human-computer interaction solution for the display element, the following briefly describes display effect implemented by the technical solutions of this application with reference to a touch operation in the accompanying drawings.

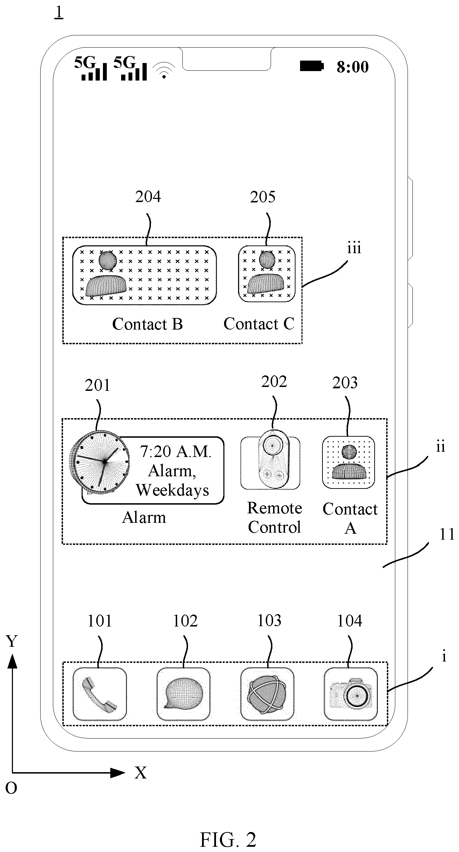

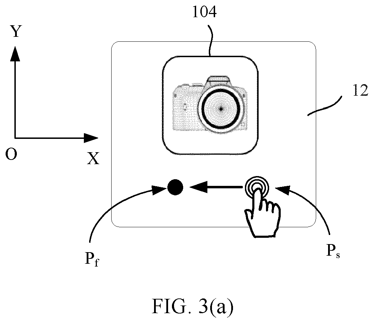

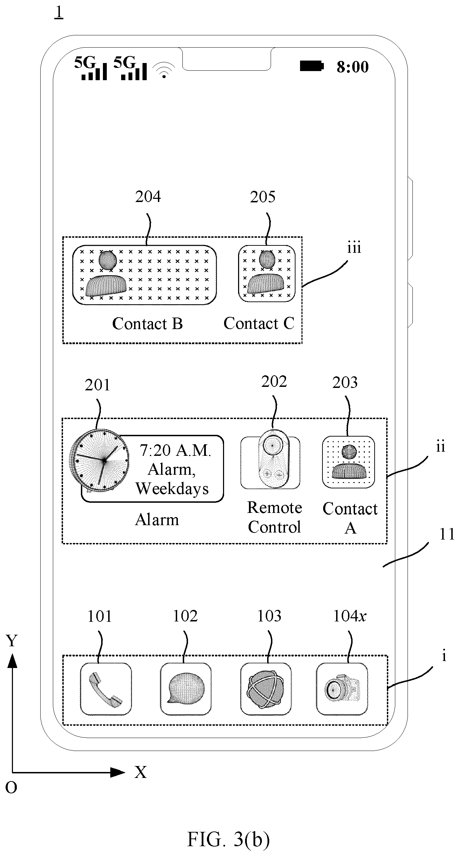

As described above, in a human-computer interaction solution, on an icon adjustment interface, a user touches a surrounding area of the icon and slides, and a mobile phone can adjust a display direction of the icon based on a sliding trajectory and a sliding direction. The display direction means an orientation of the icon. When the icon is parallel to a display, the display direction of the icon is forward. When a left side of the icon is forward and a right side is backward, the display direction of the icon is rightward. When the left side of the icon is backward and the right side is forward, the display direction of the icon is leftward. When an upper side of the icon is forward and a lower side is backward, the display direction of the icon is downward. When the upper side of the icon is backward and the lower side is forward, the display direction of the icon is upward. Specifically, FIG. 2 shows a display interface 11 of a mobile phone 1 in this application. An area i of the display interface 11 sequentially displays a phone icon 101, a messaging icon 102, a browser icon 103, and a camera icon 104 from left to right. FIG. 3(a) and FIG. 3(b) show a human-computer interaction solution for the camera icon 104 in FIG. 2 when the user performs a touch operation leftward. As shown in FIG. 3(a), the user touches the camera icon 104 on the display interface 11 of the mobile phone 1 to enter an adjustment interface 12 of the camera icon 104. The user slides, from a start location Pₛ to an end location P_{f}, on the adjustment interface 12 below the camera icon 104 in a direction parallel to an X axis, to adjust a display direction of the camera icon 104. As shown in FIG. 3(b), the area i displays the phone icon 101, the messaging icon 102, the browser icon 103, and an adjusted camera icon 104x that are sequentially distributed along the X axis from left to right. The camera icon 104x is an icon obtained by rotating the camera icon 104 around an axis parallel to a Y axis. The display direction of the camera icon may gradually change with the touch operation of the user. It may be understood that the area i is not a specified area on the display interface 11 of the mobile phone 1, and only represents an area on the display interface 11 of the mobile phone 1. Similarly, meanings of an area ii and an area iii in the following are similar to a meaning of the area i. Details are not described subsequently again.

For another example, in another human-computer interaction solution, at least two icons are displayed on the icon adjustment interface, the user selects a reference point, and the mobile phone can separately adjust a display direction of each icon based on the reference point and a location of each icon, to enable each of the at least two icons to face the reference point.

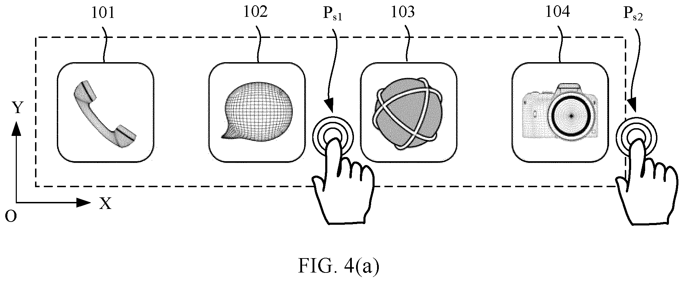

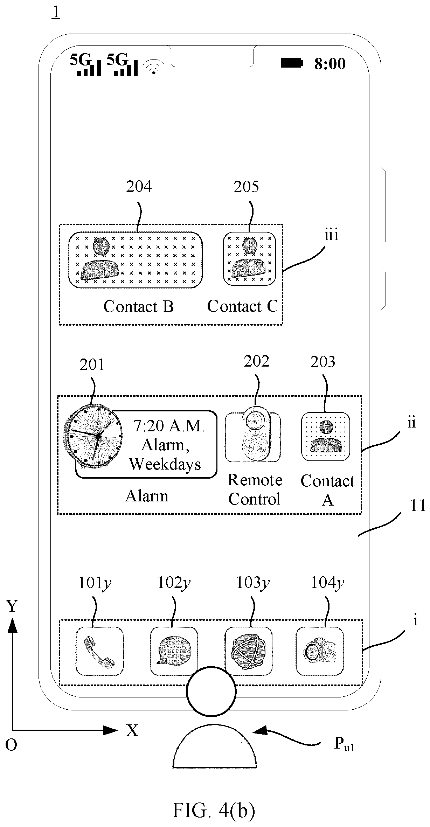

Specifically, FIG. 4(a) shows a center point touched by the user. FIG. 4(b) is a schematic diagram of the display interface 11 of the mobile phone 1. FIG. 4(b) shows 3D effect of a display element in FIG. 4(a). It can be learned with reference to FIG. 4(a) and FIG. 4(b) that the user taps a middle location Pₛ₁ in the area i, display directions of icons in the area i are separately adjusted and finally face the middle location Pₛ₁ of the display, so that a phone icon 101y, a messaging icon 102*y*, a browser icon 103y, and a camera icon 104y display naked-eye 3D effect facing a location Pᵤ₁ (corresponding to the middle location Pₛ₁ in FIG. 4(a)) of the user. Similarly, icons whose display directions are adjusted in batches may alternatively be distributed in the Y axis, or distributed in an XOY plane. Display effect of the icons is similar to that in FIG. 4(b). Details are not described herein again. It may be understood that a location tapped by the user may alternatively be on a right side (a right-side location Pₛ₂ in FIG. 4(a)) of the mobile phone 1, a left side of the mobile phone 1, an upper side of the mobile phone 1, or a lower side of the mobile phone 1. The display effect of the icons on the display interface 11 of the mobile phone 1 is similar to that in FIG. 4(b). Details are not described herein again.

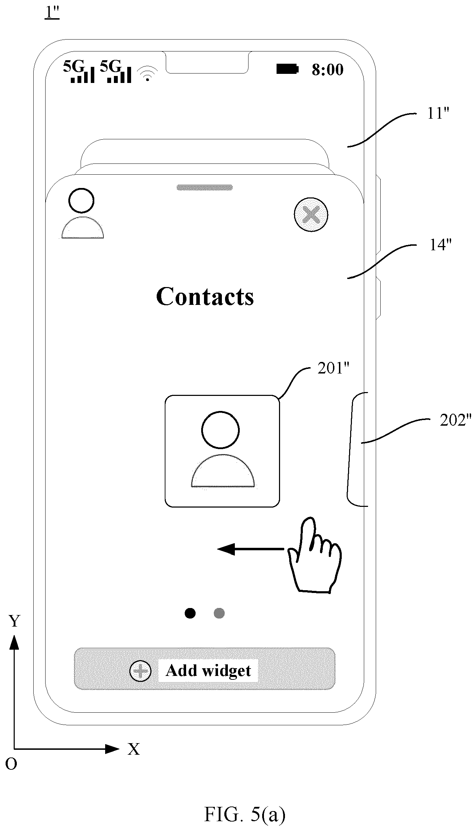

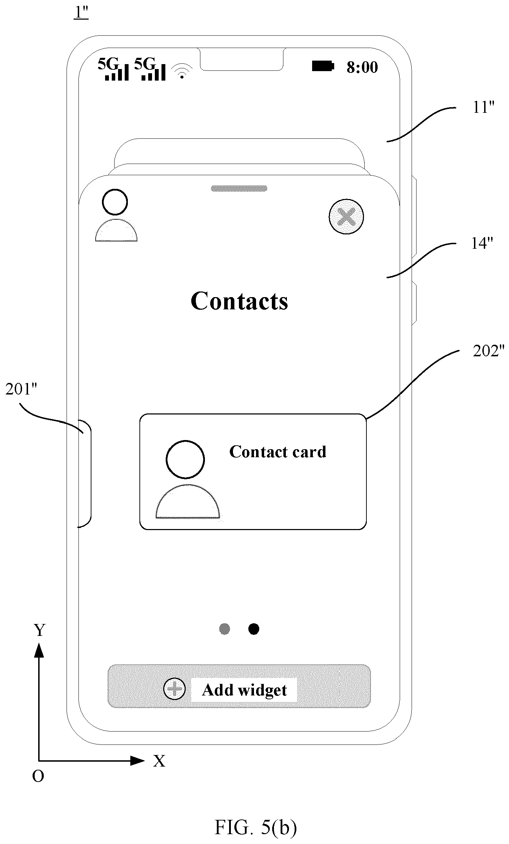

In addition to the icons in the mobile phone 1, the human-computer interaction solution may further be applied to a card and a sub-icon in the mobile phone 1. In addition, specific display effect of the card and the sub-icon is similar to the displayed display effect of the foregoing icons. Details are not described in this application again. The card is an element that is on a desktop and that corresponds to a part of functional modules of the application, and the card may be displayed as a thumbnail interface of a functional interface of the part of the functional module. The sub-icon is an icon that is on the desktop and that corresponds to a part of a functional module of the application, and the sub-icon may be displayed as an icon of the part of the functional module. Refer to FIG. 5(a) and FIG. 5(b). It can be learned that a same functional module (for example, a contact 14") of a same application may correspond to cards (for example, a first card 201" and a second card 202") of different sizes, different forms, and different colors.

It may be understood that, when the touch operation of the user is separately adjusting a display direction of one display element, it is very likely that the user wants to remain the display direction of the display element in a fixed direction. In addition, when the touch operation of the user is adjusting, in batches, a plurality of display elements, it is very likely that the user wants to remain display locations corresponding to the plurality of display elements in fixed display directions. For example, in the area i in FIG. 4(b), two display elements on the right side face the left side, and two display elements on the left side face the right side.

After a display direction of a single icon or card is adjusted by using the human-computer interaction solution, this application further includes a human-computer interaction solution for two or more display elements. For example, one card corresponding to an application covers another card corresponding to the same application. For another example, locations of two display elements are exchanged. For another example, display sizes of two adjacent display elements are adjusted.

It may be understood that, based on adjustment effect actually generated by the foregoing separate adjustment and batch adjustment, it can be learned that, in the touch operation in this application, both a manner of last display direction adjustments of the two or more display elements and a sequence of the last display direction adjustments of the two or more display elements affect display effect of the two or more display elements after the touch operation.

In an implementation, a display direction adjustment of the display elements includes directly adjusting the display directions of the display elements separately or in batches based on the touch operation, and does not include that the display elements follow or inherit a display direction of another display element.

For example, in the two or more display elements, a display element whose display direction is last adjusted has a highest priority, and priorities of the display elements are sequentially decreased in a reverse order of the adjustment sequence. Specifically, when the last display direction adjustment is a separate adjustment for a first display element, and the first display element is adjusted to another display location, a display direction of the first display element always remains unchanged. When the last display direction adjustment is a batch adjustment for a second display element and another display element, and the another element is adjusted to a location of the second display element, a display direction of the second display element continues to be used. Based on this, the following describes the human-computer interaction solution for the two or more display elements.

This application further includes a human-computer interaction solution applied to display elements corresponding to a same application. For example, the user drags a new icon or card corresponding to one application to another original icon or card corresponding to the same application, the dragged new icon or card on the display interface covers the original icon or card, and a display direction of the original icon or card continues to be used for the new icon or card after coverage. The display elements include all elements displayed on the display interface of the mobile phone, for example, an icon, a sub-icon, a card, a widget, and an assembly.

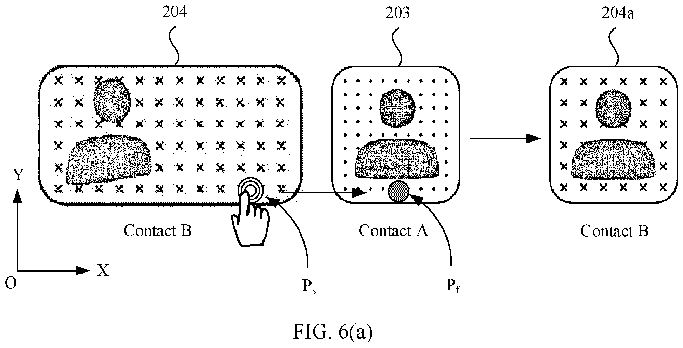

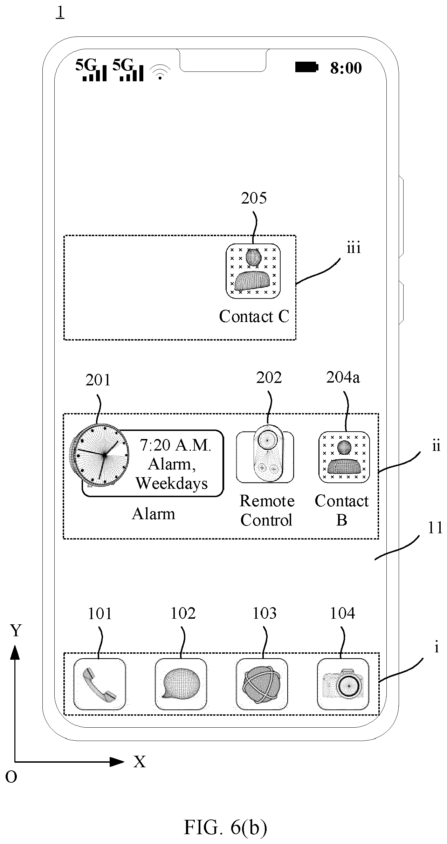

Specifically, still refer to FIG. 2. The area ii on the display interface 11 of the mobile phone 1 displays an alarm card 201, a remote control card 202, and a contact A card 203 that are sequentially distributed from left to right. The area iii on the display interface 11 of the mobile phone 1 displays a contact B card 204 and a contact C icon 205. As shown in FIG. 6(a), when the user touches the contact B card 204 and drags the contact B card 204 onto the contact A card 203, a contact B card 204a covers the contact A card 203. As shown in FIG. 6(b), a display direction and a size of the contact A card 203 continue to be used for the contact B card 204a after coverage. That is, the mobile phone hides the contact A card 203 and adjusts a display direction of the contact B card 204 from facing a right side to face a front side, so that the display direction of the contact B card 204 is consistent with the display direction of the contact A card 203. The mobile phone 1 further adjusts a size of the contact B card 204 to the size of the contact A card 203, and then displays the contact B card 204 at a location of the contact A card 203.

It may be understood that, an application scenario to which the human-computer interaction solution is applicable is that a last display direction adjustment of the contact A card 203 is performed after a last display direction adjustment of the contact B card 204, and a manner of the last display direction adjustment of the contact A card 203 is a batch adjustment. In a schematic diagram shown in FIG. 6(a), the contact B card 204 is dragged onto the contact A card 203 from left to right. This is merely an example of a display location and a dragging direction of the contact B card 204. The contact B card 204 may be distributed at any location of the display interface 11, and the direction in which the contact B card 204 is dragged toward the contact A card 203 may be any direction. This is not specifically limited in this application. Similarly, a solution for dragging the contact C icon 205 toward the contact A card 203 below is not specifically limited in this application.

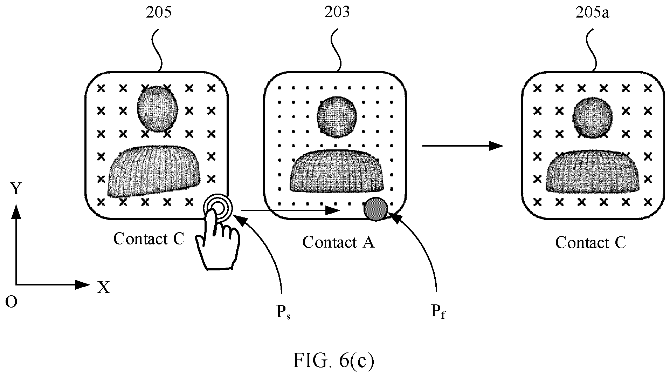

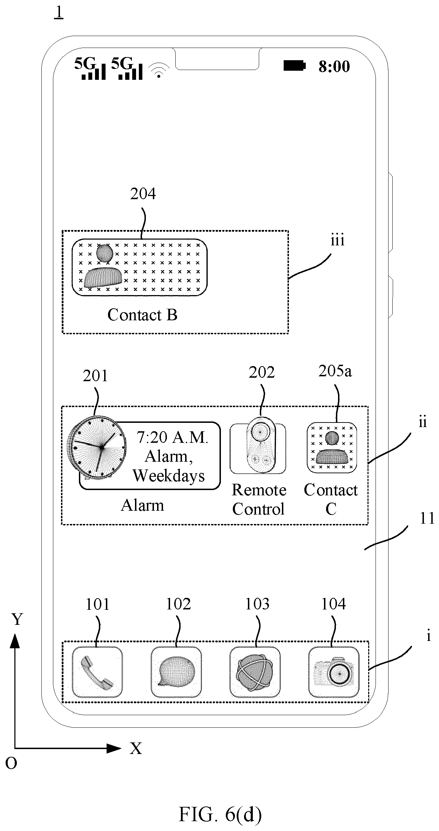

Similarly, as shown in FIG. 6(c), when the user touches the contact C icon 205 and drags the contact C icon 205 onto the contact A card 203, as shown in FIG. 6(d), a contact C icon 205a covers the contact A card 203, and the display direction and the size of the contact A card 203 continue to be used for the contact C icon 205a after coverage.

In the foregoing solution, a covering display element is displayed at a location of a covered display element in a display direction of the covered display element, and the covered display element is no longer displayed, so that the display direction and the display location of the covered display element are inherited in the covering display element. That is, it is ensured that display elements at a same location on the display interface 11 of the mobile phone are always displayed in a same display direction, so that naked-eye 3D effect that meets a use habit of a user is ensured, and the steps of adjusting a display element are further simplified.

After a display direction of a single icon or card is adjusted by using the human-computer interaction solution, this application further includes a human-computer interaction solution for display elements corresponding to different applications. For example, the user drags a card corresponding to one application onto a card corresponding to another application, locations of the cards corresponding to different applications on the display interface are exchanged, and display directions and display manners of the cards corresponding to the two applications are adaptively adjusted based on the locations of each other.

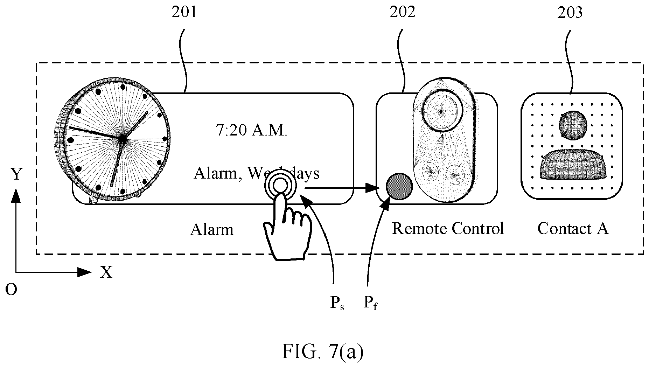

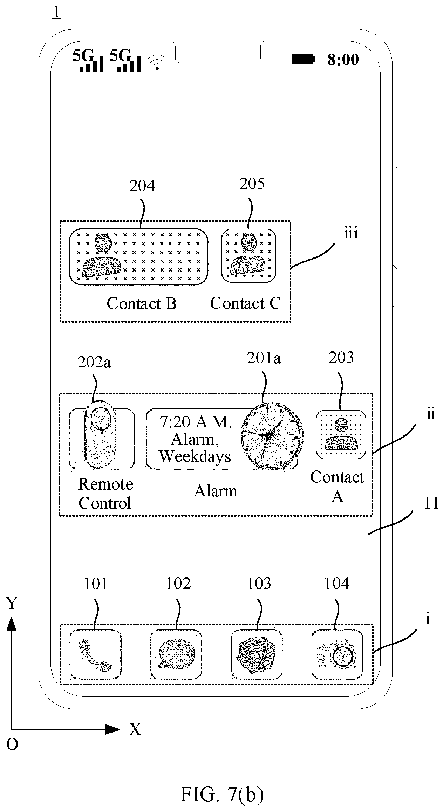

Specifically, as shown in FIG. 7(a), a display direction of the alarm card 201 faces a right side, and a display direction of the remote control card 202 faces a left side. After the user touches the alarm card 201 and drags the alarm card 201 onto the remote control card 202, locations of the alarm card 201 and the remote control card 202 are exchanged. In addition, an alarm card 201a after a location exchange is in the display direction of the original remote control card 202, and a remote control card 202a after the location exchange is in the display direction of the original alarm card 201, as shown in FIG. 7(b). Compare FIG. 7 (a) with FIG. 7 (b). It is not difficult to find that: Compared with the original alarm card 201, a size of the alarm card 201a after the location exchange is not changed; and compared with the original remote control card 202, a size of the remote control card 202a after the location exchange is not changed. However, display manners of elements in the alarm card 201a after the location exchange and elements in the remote control card 202a after the location exchange are adaptively adjusted. It may be understood that the elements include a background element, a foreground element, a text element, and the like. Specific features are described in detail below.

It may be understood that, an application scenario to which the human-computer interaction solution is applicable is that both manners of a last display direction adjustment of the alarm card 201 and a last display direction adjustment of the remote control card 202a are batch adjustments, and are not limited to a same batch adjustment.

In the foregoing solution, a display direction and a display location of an original display element continue to be used for a display element after an exchange. That is, in a process of exchanging locations of the display elements, it is ensured that display elements at a same location on the display interface 11 of the mobile phone are always displayed in a same display direction, so that a display direction that is of the naked-eye 3D effect that meets a use habit of the user is maintained, and the steps of adjusting the display element on the display interface of the mobile phone 1 are further simplified.

After the display direction of the single icon or card is adjusted by using the human-computer interaction solution, this application further includes a human-computer interaction solution for adjacent display elements. For example, the user touches a location between one card and another adjacent card, and slides toward one of the cards, sizes and display directions of the two adjacent cards on the display interface change.

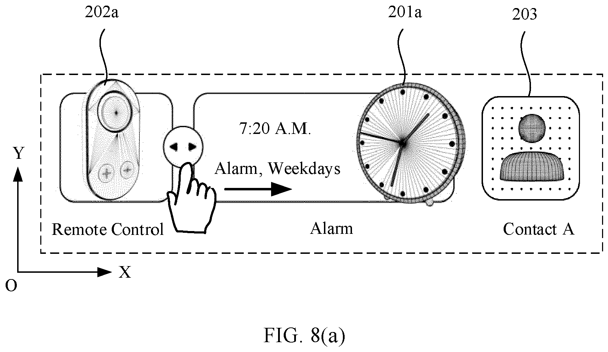

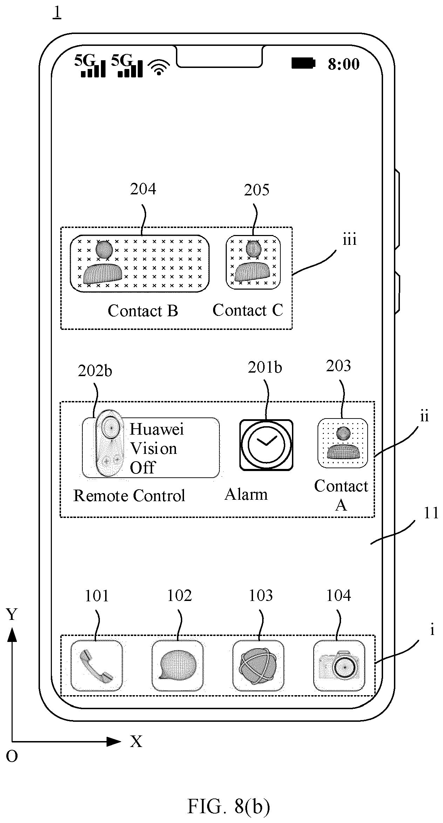

Specifically, as shown in FIG. 8(a), the remote control card 202a after the location exchange is of a small size, the alarm card 201a after the location exchange is of a large size, and the remote control card 202a after the location exchange is adjacent to the alarm card 201a after the location exchange. The user touches an area between the remote control card 202a after the location exchange and the alarm card 201a after the location exchange, and drags the area toward the alarm card 201a after the location exchange. Sizes of the remote control card 202a after the location exchange and the alarm card 201a after the location exchange are adjusted to change, and a minimum distance between the remote control card 202a after the location exchange and the alarm card 201a after the location exchange is adjusted to be unchanged. As shown in FIG. 8(b), an adjusted remote control card 202b is of a large size, and an adjusted alarm card 201b is of a small size. In addition, with reference to FIG. 8(a) and FIG. 8(b), it can be learned that, in a process in which the remote control card 202a after the location exchange is switched to the adjusted remote control card 202b, the size of the remote control card changes from small to large, and a text element "Huawei Vision" related to the remote control is displayed. On the contrary, in a process in which the alarm card 201a after the location exchange is switched to the adjusted alarm card 201b, the size of the alarm card changes from large to small, and a text element "7:20 A.M." related to the alarm card is hidden. It may be understood that, in this application, the human-computer interaction solution for two adjacent display elements is described by using the remote control card 202a after the location exchange and the alarm card 201a after the location exchange as an example. The human-computer interaction solution is also applicable to other two adjacent display elements. Details are not described herein again.

In addition, when the user touches a location between one card and another adjacent card, display directions of the cards also change. In an implementation, when display sizes of two cards are changed, a display direction of a card whose display size becomes smaller is gradually restored to an initial state. In another implementation, when the display sizes of the two cards change, a display direction of each card changes as the display size changes. For example, the touch operation of the user may be used to adjust the display sizes of the two cards. In addition, the display directions of the cards may further be adjusted based on the touch operation of the user with reference to the manner in FIG. 6(a).

In the foregoing solution, the user performs the touch operation in an area between two adjacent display elements, so that sizes and display directions of the two display elements can further be dynamically adjusted in real time, to improve smoothness in a process of changing display manners of the two display elements, and implement diversity of display effect of the two display elements. The following further describes in detail an adjustment solution for a display element in this application with reference to the accompanying drawings.

Due to diversity and complexity of the display element, to facilitate understanding of a change in display effect of the display element below, before a specific adjustment solution for the display element is described, widgets of various display elements in a mobile phone and generation principles and update principles of the various display elements in the mobile phone are first briefly described.

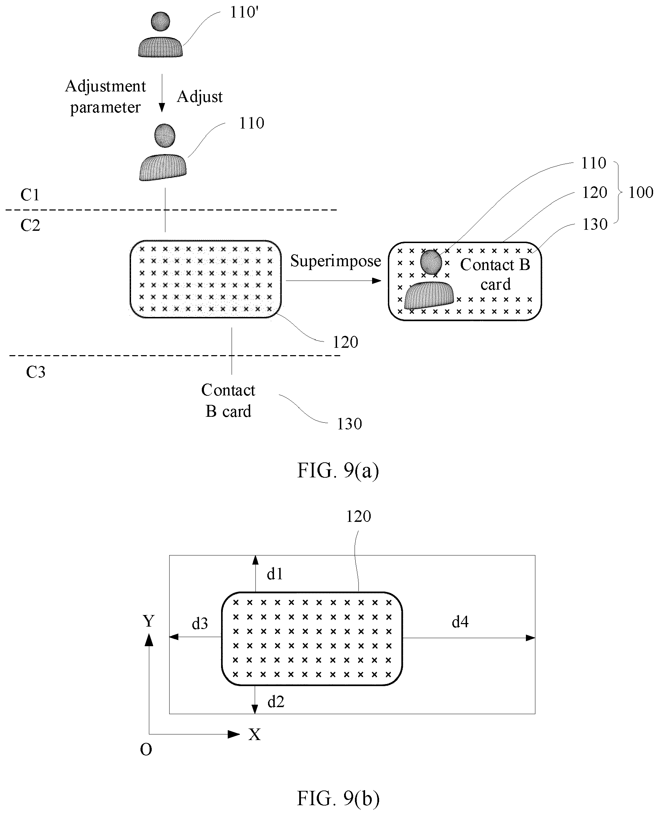

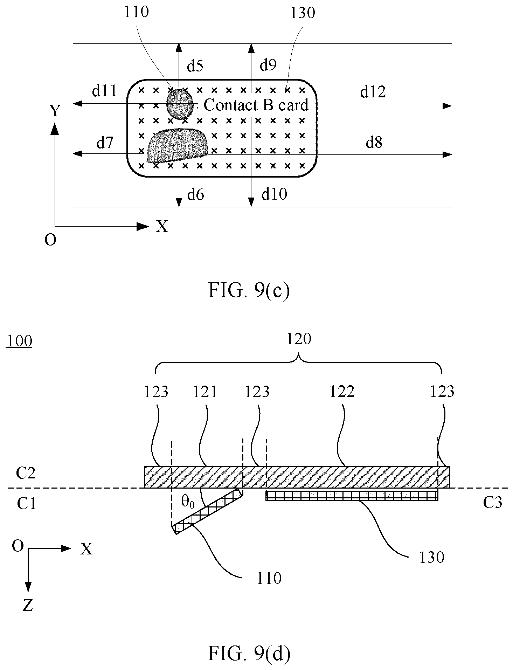

FIG. 9(a) is a principle diagram of generating a card. FIG. 9(b) is a schematic diagram of drawing a background element of a card. FIG. 9(c) is a schematic diagram of drawing a foreground element and a text element of a card. FIG. 9(d) is a principle diagram of displaying a card.

As shown in FIG. 9(a), a card 100 includes a foreground element 110, a background element 120, and a text element 130. The foreground element 110 is distributed in a foreground element layer C1, the background element 120 is distributed in a background element layer C2, and the text element 130 is distributed in a text element layer C3. Generally, the foreground element layer C1 and the text element layer C3 are located above the background element layer C2, and a mobile phone 1 superimposes the foreground element 110, the background element 120, and the text element 130 to form a card 100.

The mobile phone 1 obtains an initial element 110' having an icon meaning, and rotates the initial element 110' to obtain the foreground element 110. It may be understood that a foreground matrix is a storage form of a display model corresponding to the foreground element. The mobile phone 1 generates the background element 120 based on parameters such as a size, a location, a color, and a detail. The mobile phone 1 generates the text element 130 based on parameters such as user information and a name of a functional module. The mobile phone 1 mutually translates, scales, and superimposes the foreground element 110, the background element 120, and the text element 130 to generate an icon 100. It may be understood that the mobile phone may alternatively rotate the background element and the text element to obtain a card (that is not shown in the figure) with overall stereoscopic effect.

As shown in FIG. 9(b), after the mobile phone 1 obtains a background matrix corresponding to the background element 120, a drawing application in the mobile phone 1 draws the background element 120 in a canvas based on the background matrix. The background matrix is a matrix that can reflect display information of the background element. It may be understood that the background matrix is a storage form of a display model corresponding to the background element. The display information of the background element includes at least one of parameters such as a display direction of the background element, a color of the background element, a size of the background element, and a display location of the background element. It may be understood that a text matrix is a storage form of a display model corresponding to the text element. The canvas is a drawable carrier including a plurality of pixel points.

For example, the drawing application in the mobile phone 1 determines, based on a distance d1 from the background element 120 in the background matrix to a boundary of a canvas, a distance d2 from the background element 120 to a lower boundary, a distance d3 from the background element 120 to a left boundary, and a distance d4 from the background element 120 to a right boundary, a pixel point that corresponds to the background matrix and that is in the canvas.

As shown in FIG. 9(c), after the mobile phone 1 obtains a foreground matrix corresponding to the foreground element 110 and a text matrix corresponding to the text element 130, the drawing application in the mobile phone 1 draws the foreground element 110 in the canvas based on the foreground matrix and draws the text element 130 in the canvas based on the text matrix. The drawing application in the mobile phone can further scale and translate the foreground element 110 and the text element 130 to draw the foreground element 110 and the text element 130 in the canvas. The foreground matrix corresponding to the foreground element 110 is a matrix that can reflect display information of the foreground element. The display information of the foreground element includes at least one of parameters such as a direction of the foreground element, a color of the foreground element, a size of the foreground element, and a location of the foreground element. The text matrix corresponding to the text element 130 is a matrix that can reflect display information of the text element. The display information of the text element includes at least one of parameters such as content of a text, a color of the text, a font size of the text, and a font of the text.

For example, the drawing application in the mobile phone 1 determines, based on a distance d5 from the foreground element 110 in the foreground matrix to the upper boundary of the canvas, a distance d6 from the foreground element 110 to the lower boundary, a distance d7 from the foreground element 110 to the left boundary, and a distance d8 from the foreground element 110 to the right boundary, a pixel point that corresponds to the foreground matrix and that is in the canvas. The drawing application in the mobile phone 1 determines, based on a distance d9 from the text element 130 in the text matrix to the upper boundary of the canvas, a distance d10 from the text element 130 to the lower boundary, a distance d11 from the text element 130 to the left boundary, and a distance d12 from the text element 130 to the right boundary, a pixel point that corresponds to the foreground matrix and that is in the canvas.

The following describes in detail a human-computer interaction solution for the card 100 For example, as shown in FIG. 9(d), the foreground element 110 and the text element 130 are located above the background element 120 in parallel, and the foreground element 110 and the text element 130 are both non-transparent elements. When it is observed in a direction opposite to the Z axis, the background element 120 includes an overlapping area 121 that overlaps the foreground element 110, an overlapping area 122 that overlaps the text element 130, and a non-overlapping area 123. In this case, final display effect of the card 100 is superimposed effect of the foreground element 110, the text element 130, and the non-overlapping area 123 in the background element 120. For another example, the foreground element 110 and the text element 130 are transparent elements or semi-transparent elements. In this case, the final display effect of the card 100 is simple superimposed effect of the foreground element 110, the background element 120, and the text element 130.

It may be understood that a difference between the icon and the card lies in that the icon includes only a foreground element and a background element. Compared with the card, the icon does not relate to processing of a text element. Details are not described herein again.

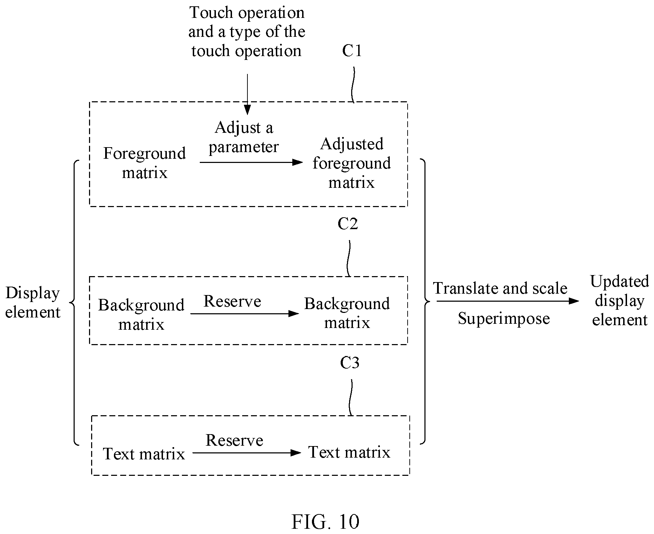

FIG. 10 is a schematic diagram of a card update principle according to this application. The card 100 needs to update the foreground element 110 to obtain an updated card 100a. The following describes the card update principle in the mobile phone 1 with reference to FIG. 9(a) to FIG. 10. For example, a user adjusts a display direction of the foreground element in the card through a touch operation. The mobile phone 1 obtains the foreground matrix corresponding to the foreground element, the background matrix corresponding to the background element, and the text matrix corresponding to the text element. The mobile phone 1 determines adjustment parameters based on a type of the touch operation performed by the user on the display element, determines adjustment variables of the display element based on the touch operation performed by the user on the display element, and adjusts the foreground matrix obtained by the mobile phone 1 based on the adjustment parameters and the adjustment variables, to obtain an adjusted foreground matrix. The mobile phone reserves the obtained background matrix and the obtained text matrix. The adjustment parameters include a camera parameter used to adjust the display direction of the foreground element, a color parameter used to adjust the color of the foreground element, a detail parameter used to adjust a detail feature of the foreground element, and the like. The camera parameter includes at least one of parameters such as a rotation angle around the X axis, a rotation angle around the Y axis, and a rotation angle around the Z axis. For example, the mobile phone 1 invokes a preset function corresponding to the foreground matrix, and inputs the adjustment variables corresponding to the adjustment parameters into the preset function, to modify the foreground matrix.

In an implementation, the mobile phone 1 obtains an updated foreground element 110a based on the adjusted foreground matrix, and obtains the background element 120 corresponding to the background matrix and the text element 130 corresponding to the text matrix. The mobile phone 1 superimposes the updated foreground element 110a, the background element 120, and the text element 130 to obtain an updated display element 100a.

In another implementation, the mobile phone 1 generates a composite matrix based on the adjusted foreground matrix, the reserved background matrix, and the reserved text matrix, and draws the updated card 100a in the canvas based on the composite matrix.

It may be understood that the foregoing update solution shows only an example in which the mobile phone 1 adjusts the foreground element. It may be understood that the foregoing update solution may be further used to adjust the background element and the text element in the card. In addition, the foregoing update solution may be further used to update the foreground element and the background element in the icon. Details are not described herein again.

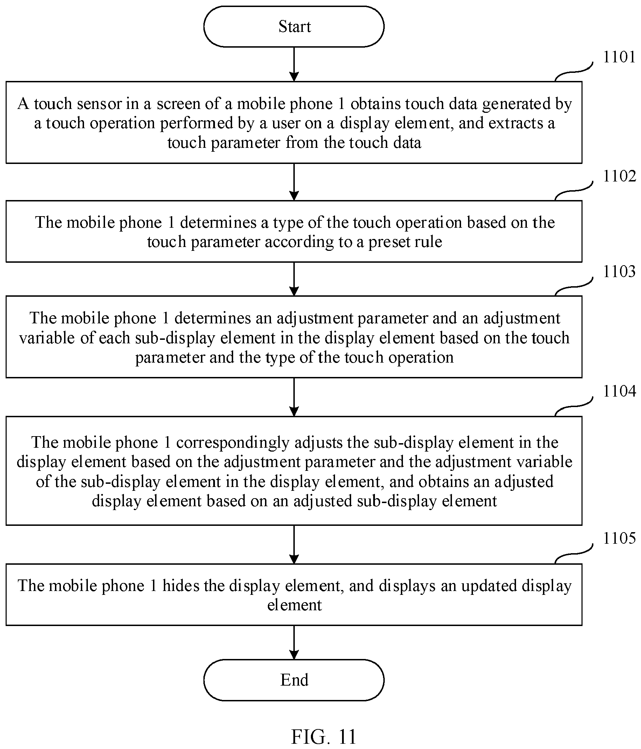

After the display principle and the update principle of the display element are described, the following describes in detail a human-computer interaction solution for the display element in this application. FIG. 11 shows a flowchart of a human-computer interaction solution for a display element. As shown in FIG. 11, the human-computer interaction solution for the display element in this application specifically includes the following steps.

S1101: A touch sensor in a screen of a mobile phone 1 obtains touch data generated by a touch operation performed by a user on a display element, and extracts touch parameters from the touch data.

The touch operation of the user is an operation formed when the user touches an adjustment interface. The adjustment interface may be a display desktop of the mobile phone 1, or a specific interface that is displayed in response to a specific operation of the user. The specific operation may be tapping the display element, double-tapping the display element, touching and holding the display element, or the like. It may be understood that the foregoing is merely an example of the specific operation. The specific operation may alternatively be another operation form formed with reference to parameters such as a touch location, a touch duration, a touch pressure, a touch frequency, and a touch area. This is not specifically limited in this application. The touch data is original data generated based on the touch operation of the user, for example, touch point coordinates arranged based on a touch sequence. The touch parameters are related parameters that are extracted from the touch data or generated based on the touch data and that can reflect an adjustment manner that the user wants to implement. For example, the touch parameters include start point coordinates, end point coordinates, a touch direction, a touch trajectory, and a length of the touch trajectory. A start point is a first location point at which a finger of the user starts to touch the adjustment interface. An end point is a last location point at which the finger of the user that is about to leave the adjustment interface. A touch path may be a connection line of all location points through which the finger of the user passes in a process of sliding from the start point to the end point. An extension direction of the touch path is a direction that points to the end point from the start point along the touch path. The extension direction of the touch path represents a rotation direction of the display element, and a length of the touch path represents a rotation angle of the display element. It may be understood that the touch direction, the touch trajectory, and the length of the touch trajectory are in a one-to-one correspondence with camera parameters.

S 1102: The mobile phone 1 determines a type of the touch operation based on the touch parameters according to a preset rule.

For example, the mobile phone 1 obtains the type of the touch operation based on the display element and the touch parameters. Attributes of the display element include a quantity of display elements, an application corresponding to the display element, and the like.

The type of the touch operation means an adjustment manner of the display element corresponding to the touch operation of the user. For example, the type of the touch operation includes adjusting a display direction of a single display element, adjusting, in batches, display directions of display elements, using one display element to cover another display element, exchanging display locations of two display elements, adjusting sizes of two display elements, or the like.

In some implementations, the preset rule includes: When an initial location and an end location of the touch operation of the user are located on a same display element, the type of the touch operation is adjusting a display direction of a single display element. When the initial location of the touch operation of the user is located in an area in which one display element corresponding to one application is located, and the end location of the touch operation of the user is located on another display element corresponding to the same application, the type of the touch operation is using the display element to cover and replace the another display element. When the initial location of the touch operation of the user is located in an area in which one display element is located, the end location of the touch operation of the user is located on another adjacent display element, and the end location crosses a center line of the another display element, the type of the touch operation is exchanging display locations of the two connected display elements. When the initial location of the touch operation of the user is located in a middle area of two adjacent display elements, and the end location of the touch operation of the user is located on one of the display elements, the type of the touch operation is adjusting sizes of the two display elements.

S1103: The mobile phone 1 determines adjustment parameters and adjustment variables of each sub-display element in the display element based on the touch parameters and the type of the touch operation.

The sub-display elements may be a foreground element and a background element in an icon. The sub-display elements may alternatively be a foreground element, a background element, and a text element in a card. The adjustment parameter is a parameter that is determined based on the type of the touch operation and that needs to be adjusted in display information to implement adjustment effect. The adjustment parameter and the adjustment variable are also used to adjust a display model corresponding to each sub-display element. For example, the adjustment parameter may be used to adjust the display direction, and specifically includes at least one of an X-axis rotation angle parameter, a Y-axis rotation angle parameter, and a Z-axis rotation angle parameter. The adjustment variable is a change amount, of each adjustment parameter, that is obtained based on the touch operation and that corresponds to each type of the touch operation.

S1104: The mobile phone 1 correspondingly adjusts the sub-display element in the display element based on the adjustment parameters and the adjustment variables of the sub-display element in the display element, and obtains an adjusted display element based on an adjusted sub-display element. Matrices respectively corresponding to the display elements are respectively distributed in a plurality of layers of canvases that are arranged based on a preset sequence, and each layer of the canvas in the plurality of layers of the canvases displays a sub-display element corresponding to a matrix disposed at the layer. The mobile phone invokes a preset function, and inputs adjustment variables of adjustment parameters of one or more sub-display elements into the preset function. In some embodiments, the sub-display elements in the display element have matrices respectively corresponding to the sub-display elements and sub-amounts, to modify the matrices corresponding to these sub-display elements. After obtaining adjusted matrices corresponding to these sub-display elements, the mobile phone separately disposes the adjusted matrices corresponding to these sub-display elements in the corresponding canvases in the plurality of layers of the canvases, so that reset canvases can update the sub-display elements based on the adjusted matrices. Finally, the plurality of layers of the canvases generate the adjusted display element based on updated sub-display elements and reserved sub-display elements.

For example, the display element includes the foreground element and the background element, the foreground element is disposed on a front-layer canvas, the background element is disposed on a back-layer canvas, and the adjustment parameter is a rotation angle by which the foreground element rotates around an X axis. The mobile phone inputs, into the preset function, a value of the rotation angle by which the foreground element rotates around the X axis, to modify a foreground matrix corresponding to the foreground element to obtain an adjusted foreground matrix. Then, the mobile phone disposes the adjusted foreground matrix to the front-layer canvas. The front-layer canvas generates an adjusted foreground element based on the adjusted foreground matrix.

The front-layer canvas and the back-layer canvas generate the adjusted display element based on the adjusted foreground element and the background element.

In some other embodiments, the sub-display elements in the display element have the matrices respectively corresponding to the sub-display elements. The matrices respectively corresponding to the sub-display elements are sequentially disposed in the canvases based on the preset sequence. The mobile phone invokes the preset function, and inputs the adjustment variables of the adjustment parameters of the one or more sub-display elements into the preset function, to modify the matrices corresponding to these sub-display elements. After obtaining the adjusted matrices corresponding to these sub-display elements, the mobile phone still sequentially and separately disposes the adjusted matrices and reserved matrices in the canvases based on the preset sequence, so that the canvases can update the display element based on the adjusted matrices.

For example, the display element includes the background element, the foreground element, and the text element, and the foreground element and the text element are distributed above the background element in parallel. That is, the matrices corresponding to the sub-display elements in the display element include a background matrix corresponding to the background element, the foreground matrix corresponding to the foreground element, and a text matrix corresponding to the text element, and the foreground matrix and the text matrix are disposed above the background matrix. It may be understood that the matrix at an upper layer is a matrix that is applied to the canvas later. That is, in this implementation, the background matrix is first applied to the canvas, then the foreground matrix and the text matrix are applied to the canvases, and display areas that are of the foreground matrix and the text matrix and that are in the canvases at least partially overlap an area, in the canvas, to which the background matrix is applied. It is not difficult to understand, according to the generation principle of the display element described above, that the foreground matrix and the text matrix are completely displayed in the canvases, and the background matrix is displayed only in an area in which the foreground matrix and the text matrix do not overlap with the background matrix. It may be understood that when the foreground matrix and the text matrix do not overlap, a sequence in which the foreground matrix and the text matrix are applied to the canvases is not specifically limited in this application.

In some other embodiments, the sub-display elements in the display element have the matrices respectively corresponding to the sub-display elements. The mobile phone processes the matrices respectively corresponding to the sub-display elements based on preset processing logic to obtain a composite matrix obtained by superimposing all the sub-display elements. The mobile phone disposes the composite matrix in the canvas. The mobile phone invokes the preset function, and inputs the adjustment variables of the adjustment parameters of the one or more sub-display elements into the preset function, to modify the matrices corresponding to these sub-display elements. After obtaining the adjusted matrices corresponding to these sub-display elements, the mobile phone processes the adjusted matrices and the reserved matrices based on the preset processing logic to obtain an adjusted composite matrix obtained by superimposing all the sub-display elements. The mobile phone disposes the adjusted composite matrix in the canvas, so that the canvas can update the display element based on the adjusted matrix.

The following describes in detail a specific solution for applying the matrix corresponding to the sub-display element to the canvas.

In some embodiments, in a process of applying the matrix to the canvas, the mobile phone may adjust a placement location of the matrix in the canvas by setting a location parameter in the canvas, to adjust relative locations of elements corresponding to a plurality of matrices. For example, the mobile phone invokes a function translate (x, y), and determines, based on x and y in the function, a translated location of an element corresponding to the matrix.

In addition, the mobile phone may further adjust a display size that is of the element corresponding to the matrix and that is in the canvas by setting a scaling parameter in the canvas. The scaling parameter may be a scaling reference point (for example, any coordinate point in the canvas) and a scaling ratio (for example, 0.5). It may be understood that because an element presented by using the canvas is a two-dimensional image, the scaling parameter may be a group of data of which two dimensions are mutually locked, or the scaling parameter may be two groups of data of which two dimensions are not locked. Alternatively, the scaling parameter may be a distance between a boundary line of the element corresponding to the matrix and a boundary of the canvas. For example, the mobile phone invokes a function canvas.clip Rect (left, top, right, bottom), and crops, based on location boundaries left, top, right, and bottom in the function, scaled boundaries of the element corresponding to the matrix, to adjust a display size of the element in the canvas.

In addition, the mobile phone may further adjust a display color that is of the element corresponding to the matrix and that is in the canvas by setting a color parameter in the canvas. The mobile phone may further adjust a detail that is of the element corresponding to the matrix and that is in the canvas by setting a detail parameter in the canvas.

S1105: The mobile phone 1 hides the display element, and displays an updated display element. In some embodiments, the mobile phone 1 invokes the invalid function to implement an interactive animation between the display element and the updated display element.

In addition, in some other embodiments, the touch operation of the user may be further used to enable the mobile phone 1 to be set based on a location of the display element on the display interface 11 of the mobile phone 1 and a reference location set by the user, and is used to adjust the display element to face the reference location. In this embodiment, the touch operation of the user is used to generate an automatic control instruction, and the automatic control instruction can implement an adjustment of at least one display element without requiring the user to provide specific touch data.

In some embodiments, the adjustment solution for the display element may be used to adjust one display element on the display interface 11 of the mobile phone 1.

In some other embodiments, the adjustment solution for the display element may be further used to simultaneously adjust one group of display elements on the display interface 11 of the mobile phone 1. For example, the foregoing adjustment solution is used to adjust display directions of one group of display elements to a same direction. For another example, the foregoing adjustment solution is further used to adjust display directions of one group of display elements to face a location, where adjusted display directions of the group of display elements are different.

The following describes in detail the adjustment solution for the display element with reference to a specific touch operation of the user.

In some application scenarios, the touch trajectory in the touch parameters is located in an area in which a same display element is located. In this case, the type of the touch operation is rotating a single display element. The display element may rotate around at least one of the X axis, the Y axis, and the Z axis.

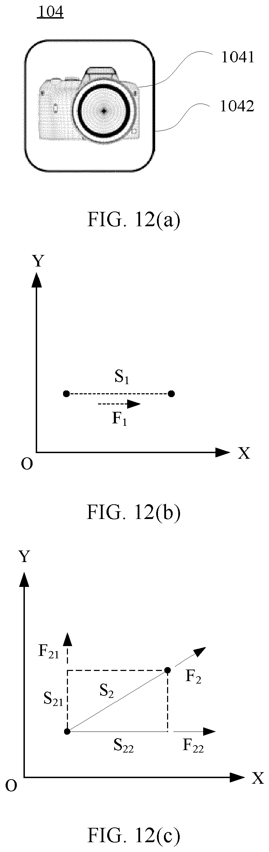

In some implementations, the touch trajectory is parallel to the Y axis, and the type of the touch operation is that the foreground element in the display element rotates around the X axis by a preset angle. As shown in FIG. 12(a), the display element is a camera icon 104. The camera icon 104 includes a camera foreground element 1041 and a camera background element 1042. The following uses an example in which the touch trajectory in the touch parameters is on an adjustment interface 12 of the camera foreground element 1041 in the camera icon 104 in FIG. 5 for description. The touch direction represents a rotation axis and a rotation direction of the camera foreground element 1041, and the length of the touch trajectory represents a magnitude of the preset angle.

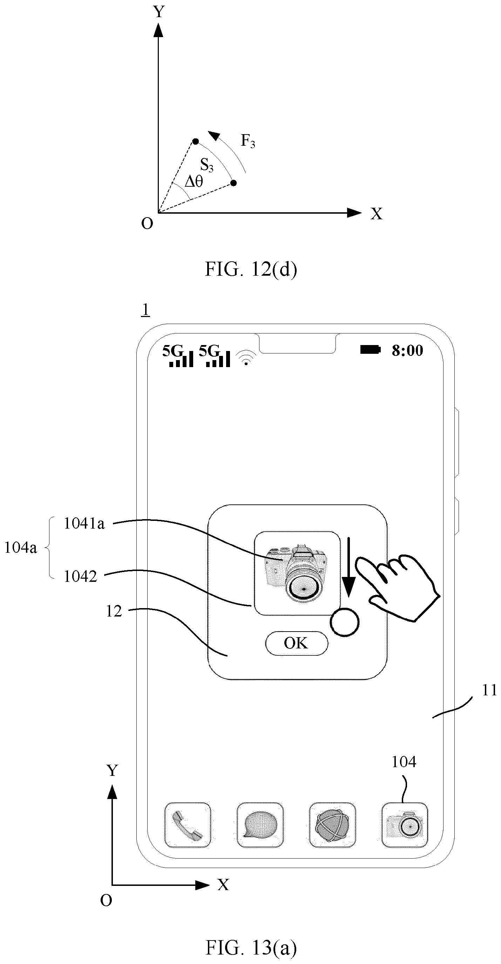

As shown in FIG. 12(b), when a touch direction F1 is parallel to the X axis, the camera foreground element 1041 rotates around the Y axis. A length of a touch trajectory S1 represents a magnitude of a preset angle. A longer length of the touch trajectory S1 indicates a larger angle by which the camera foreground element 1041 rotates around the Y axis. Similarly, when the touch direction is parallel to the Y axis, the camera foreground element 1041 rotates around the X axis. Details are not described herein again. As shown in FIG. 12(c), when a touch direction F₂ may be split into a direction F₂₂ parallel to the X axis and a direction F₂₁ parallel to the X axis, the camera foreground element 1041 rotates around the X axis and the Y axis. A length of a projection S₂₂ that is of a touch trajectory S₂ and that is on the X axis represents a magnitude of a preset angle by which the camera foreground element 1041 rotates around the Y axis, and a length of a projection S₂₁ that is of the touch trajectory S₂ and that is on the Y axis represents a magnitude of a preset angle by which the camera foreground element 1041 rotates around the X axis. As shown in FIG. 12(d), when a touch direction F₃ is in an XOY plane and extends along an arc by using O as a circle center, the camera foreground element 1041 rotates around the Z axis, and an included angle Δθ between a connection line between a start point of a touch trajectory S₃ and the O point and a connection line between an end point of the touch trajectory S₃ and the O point is an angle by which the camera foreground element 1041 rotates around the Z axis.

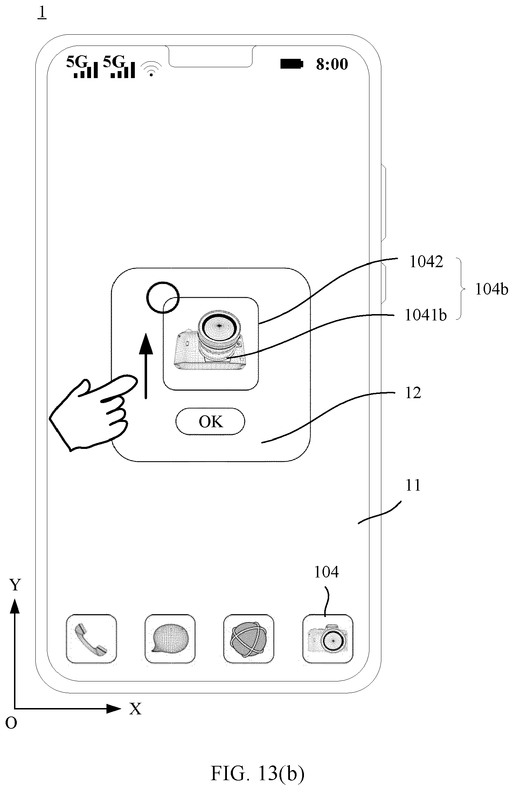

For example, in some other implementations, as shown in FIG. 13(a), an initial state of the camera icon 104 is facing a front side. The finger of the user touches one point on the adjustment interface 12 of the mobile phone 1, and slides towards a lower side of the mobile phone 1 along the Y axis. A length of a touch trajectory represents a magnitude of a preset angle by which a camera foreground element 1041a rotates around the X axis, and the camera foreground element 1041a rotates clockwise around the X axis (observing from a left side). For another example, as shown in FIG. 13(b), the initial state of the camera icon 104 is facing the front side. The user touches one point on the adjustment interface 12 of the mobile phone 1, and slides towards an upper side of the mobile phone 1 along the Y axis. A length of a touch trajectory represents a magnitude of a preset angle by which a camera foreground element 1041b rotates around the X axis, and the camera foreground element 1041b rotates counterclockwise around the X axis (observing from the left side). The mobile phone adjusts, based on the rotation axis, that is, the X axis, the rotation direction, and the preset angle of the camera foreground element 1041, a display parameter in a foreground matrix corresponding to the camera foreground element 1041, to implement an adjustment of the camera foreground element 1041.

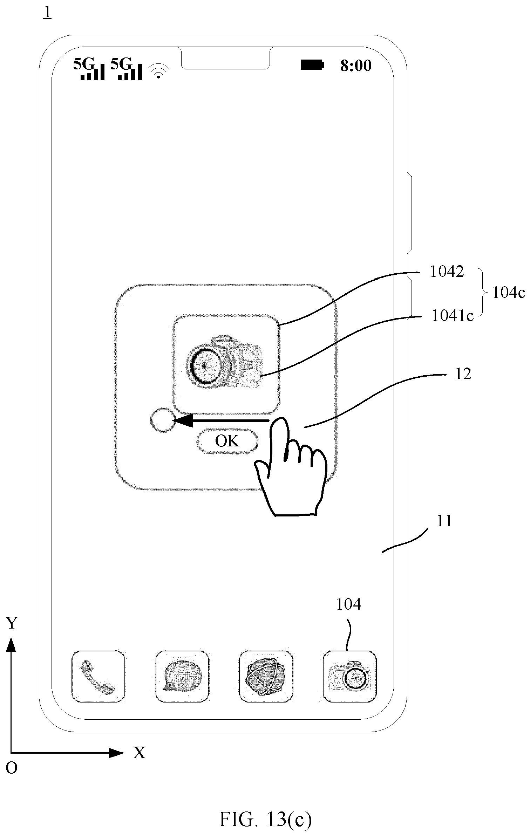

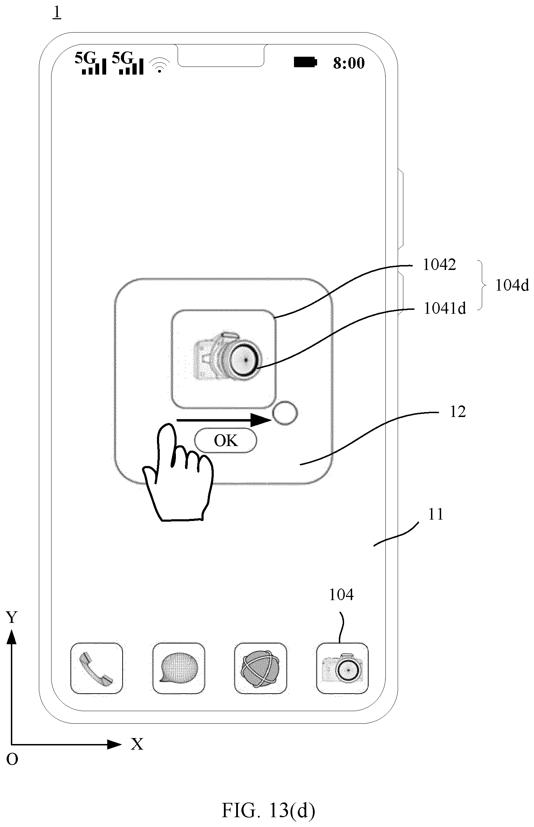

For another example, in some other implementations, the touch trajectory is parallel to the X axis, and the type of the touch operation is that the foreground element in the display element rotates around the Y axis by the preset angle. For example, as shown in FIG. 13(c), the initial state of the camera icon 104 is facing the front side. The finger of the user touches one point on the adjustment interface 12 of the mobile phone 1, and slides towards a left side of the mobile phone 1 along the X axis. A length of a touch trajectory represents a magnitude of a preset angle by which a camera foreground element 1041c rotates around the Y axis, and the camera foreground element 1041c rotates clockwise around the Y axis (observing from the upper side). For another example, as shown in FIG. 13(d), the initial state of the camera icon 104 is facing the front side. The finger of the user touches one point on the adjustment interface 12 of the mobile phone 1, and slides towards a right side of the mobile phone 1 along the X axis. A length of a touch trajectory represents a magnitude of a preset angle by which a camera foreground element 1041d rotates around the Y axis, and the camera foreground element 1041d rotates counterclockwise around the Y axis (observing from the upper side). The mobile phone adjusts, based on the rotation axis, that is, the Y axis, the rotation direction, and the preset angle of the camera foreground element 1041, the display parameter in the foreground matrix corresponding to the camera foreground element 1041, to implement an adjustment of the camera foreground element 1041.

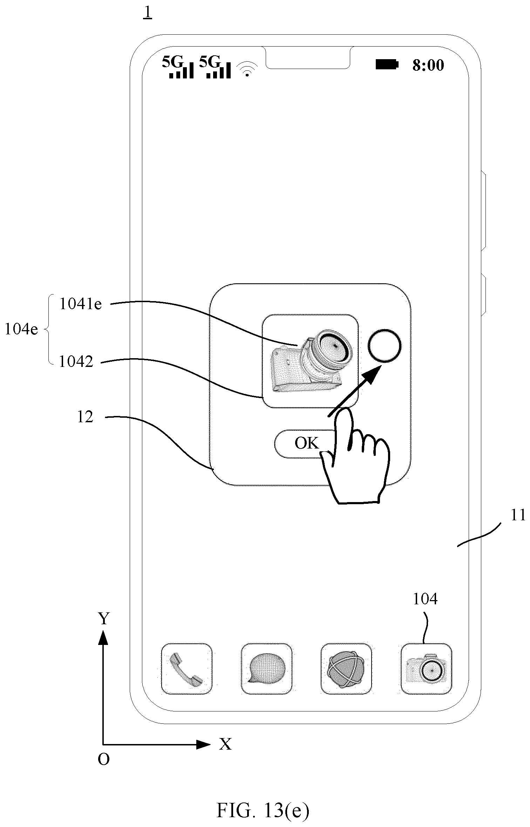

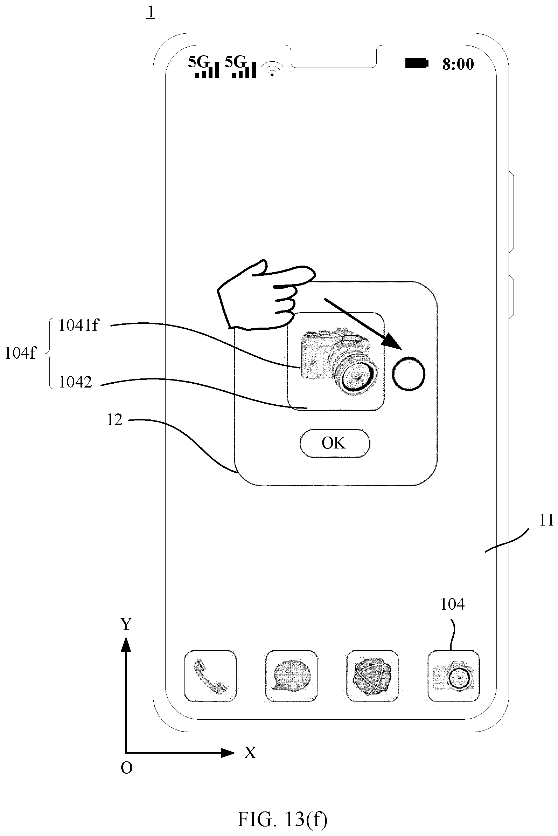

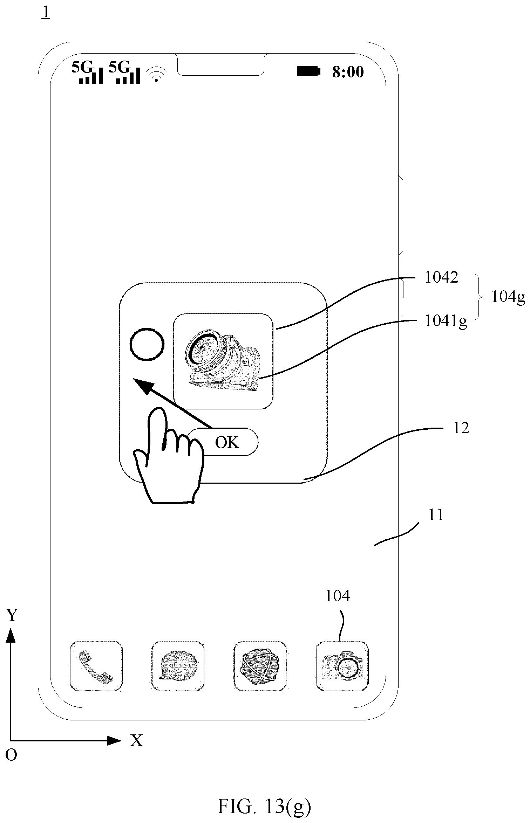

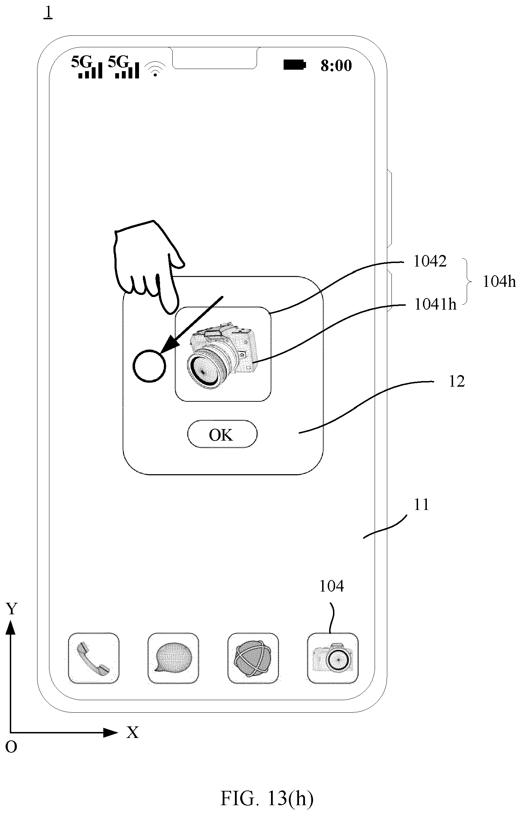

For another example, in some other implementations, the touch trajectory is a straight line that is in the XOY plane and that is not parallel to the X axis and the Y axis, and the type of the touch operation is that the foreground element in the display element separately rotates around the X axis and the Y axis by the preset angle. For example, as shown in FIG. 13(e), FIG. 13(f), FIG. 13(g), and FIG. 13(h), the initial state of the camera icon 104 is facing the front side. The finger of the user touches one point on the adjustment interface 12 of the mobile phone 1, and moves along a straight line to another point in the XOY plane. A component that is of a touch trajectory and that is on the Y axis represents a magnitude of a first preset angle by which a camera foreground element 1041e/1041f/1041g/1041h rotates around the X axis. Similarly, a component that is of the touch trajectory and that is on the X axis represents a magnitude of a second preset angle by which the camera foreground element 1041e/1041f/1041g/1041h rotates around the Y axis. The mobile phone adjusts, based on the rotation axes, that is, the X axis and the Y axis, the rotation direction, and the preset angle of the camera foreground element 1041, the display parameter in the foreground matrix corresponding to the camera foreground element 1041, to implement an adjustment of the camera foreground element 1041.

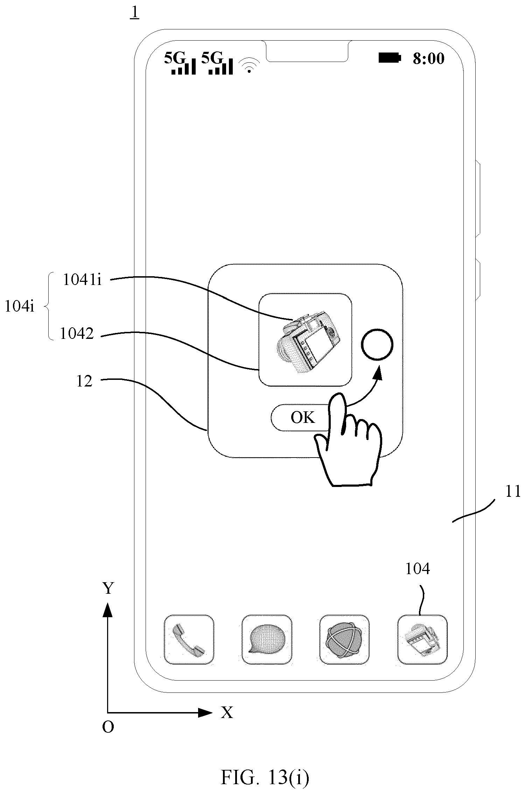

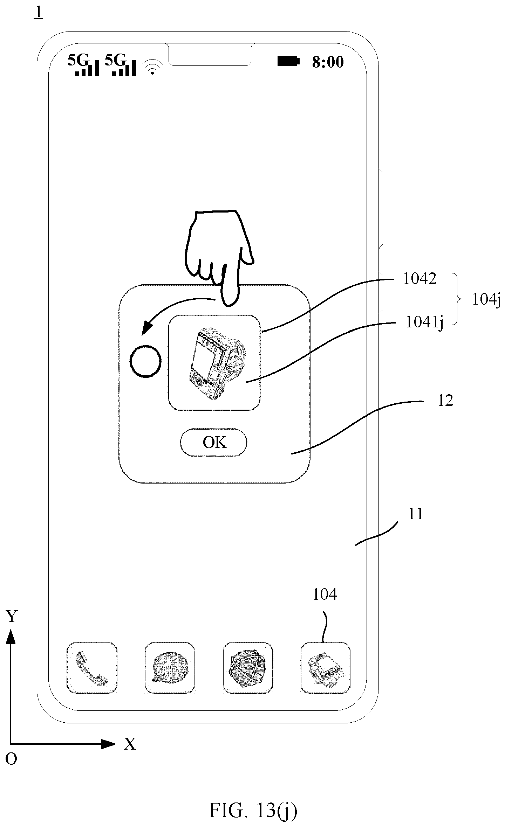

For another example, in some other implementations, the touch trajectory is an arc that is in the XOY plane and that uses a center point of the element as a center, and the type of the touch operation is that the foreground element in the display element rotates around the Z axis by the preset angle. For example, as shown in FIG. 13(i), the initial state of the camera icon 104 is a state of a camera icon in an area i in FIG. 13(i). The finger of the user touches one point on the adjustment interface 12 of the mobile phone 1, and rotates and slides clockwise around the Z axis in the XOY plane. An angle corresponding to a touch trajectory represents a magnitude of the preset angle. For another example, as shown in FIG. 13(j), the initial state of the camera icon 104 is a state of a camera icon in an area i in FIG. 13(j). The finger of the user touches one point on the adjustment interface 12, and rotates and slides counterclockwise around the Z axis in the XOY plane. An angle corresponding to a touch trajectory represents a magnitude of the preset angle. The mobile phone adjusts, based on the rotation axis, that is, the Z axis, the rotation direction, and the preset angle of the camera foreground element 1041, the display parameter in the foreground matrix corresponding to the camera foreground element 1041, to implement an adjustment of the camera foreground element 1041.

For another example, in some other implementations, the touch operation of the user may alternatively be setting a location point that indicates an orientation of the foreground element in the display element. For example, the finger of the user touches a location point that the camera foreground element 1041 in the camera icon 104 faces. It may be understood that an adjustment object of the touch operation is not limited to only the foreground element, may be the background element and the text element, or may be at least two of the foreground element, the background element, and the text element. This is not specifically limited in this application.

In addition, in some other implementations, due to impact of operation precision, that the finger of the user touches one point on the adjustment interface 12 of the mobile phone 1, and slides towards another point on the adjustment interface 12 of the mobile phone 1 may include integration of at least two of the foregoing three operation trajectories. In other words, the touch operation includes at least two of the foregoing three touch operations.

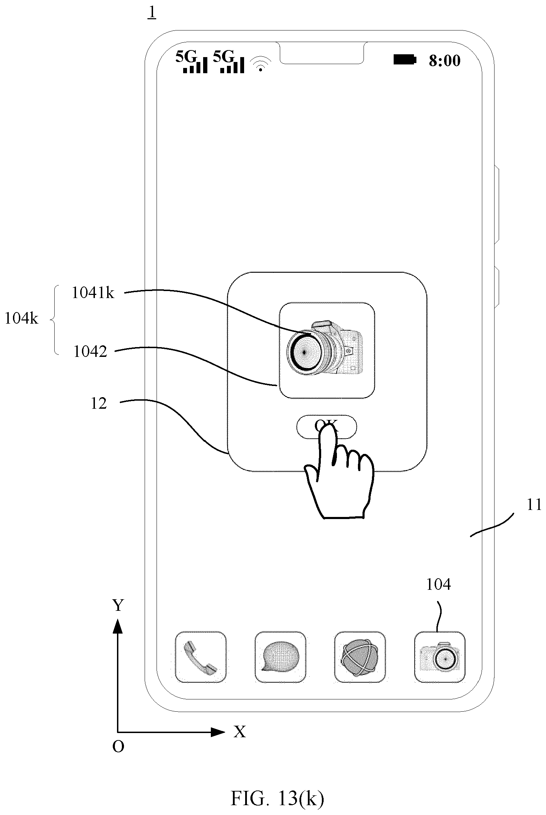

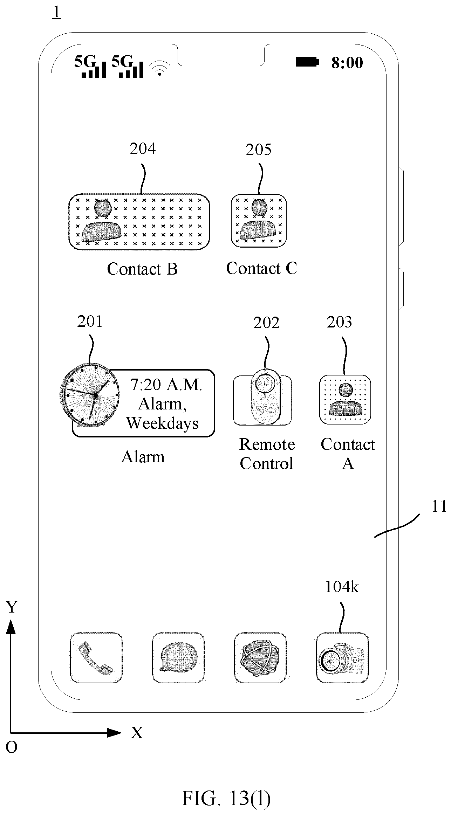

As shown in FIG. 13(k), after the display direction of the display element is adjusted, the mobile phone 1 receives a confirmation instruction entered by the user. For example, the user taps an OK button on the adjustment interface 12, to complete an adjustment of the display element, as shown in FIG. 13(l).

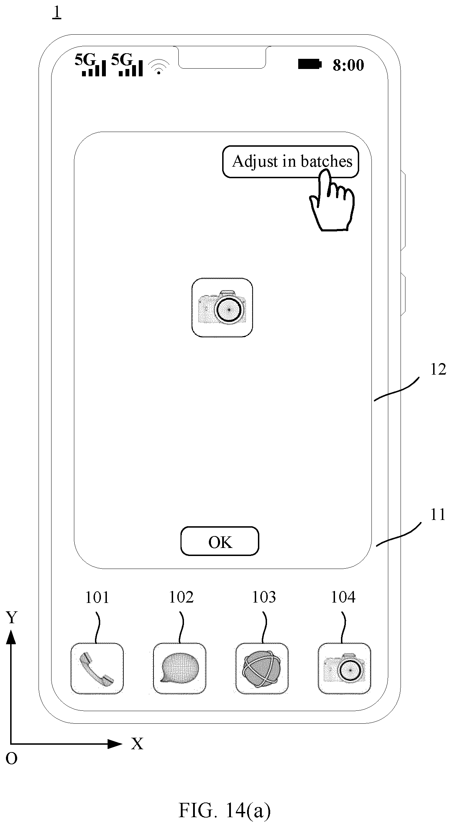

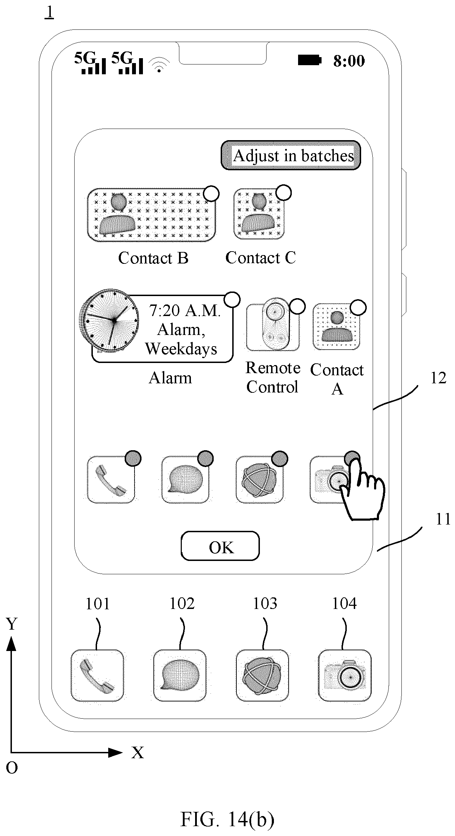

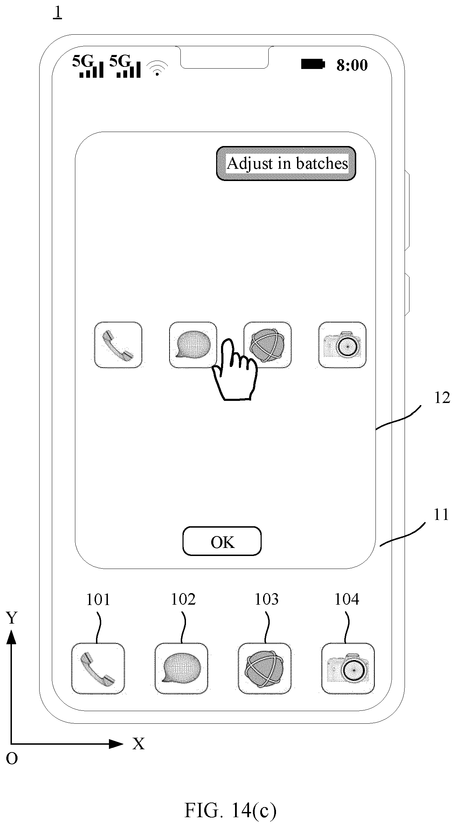

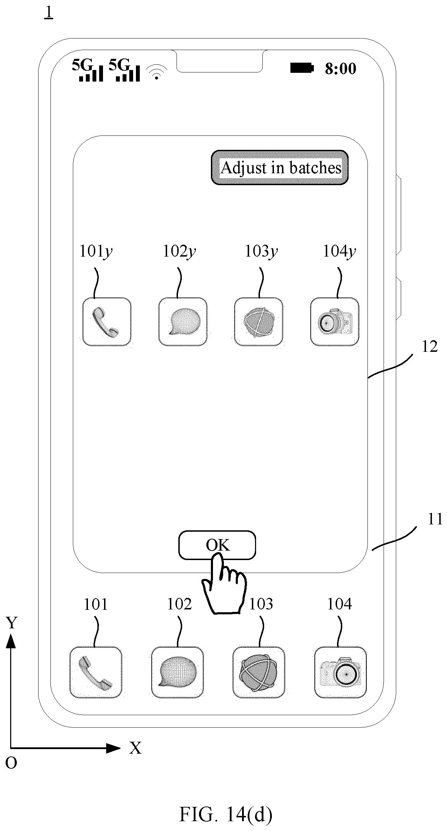

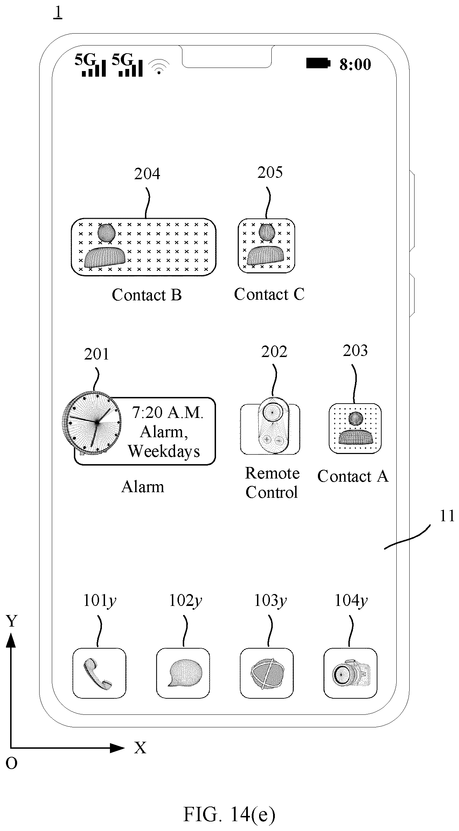

Similarly, as shown in FIG. 14(a), the adjustment interface 12 for adjusting the display element is displayed on the mobile phone 1, and a batch adjustment button 105 is tapped. After the user enters the adjustment interface 12, the batch adjustment button is displayed on the adjustment interface 12. After the user taps the batch adjustment button, a plurality of display elements are displayed on the adjustment interface 12 of the mobile phone 1. The user selects a phone icon 101, a messaging icon 102, a browser icon 103, and a camera icon 104 from the plurality of display elements, and then enters a batch adjustment process of the phone icon 101, the messaging icon 102, the browser icon 103, and the camera icon 104, as shown in FIG. 14(b). As shown in FIG. 14(c), after the user touches a reference location on the display interface 12, display directions of the phone icon 101, the messaging icon 102, the browser icon 103, and the camera icon 104 on the adjustment interface 12 are respectively adjusted based on the locations thereof and the reference location. As shown in FIG. 14(d), after the display directions of all the icons are adjusted, the mobile phone 1 receives the confirmation instruction entered by the user. For example, the user taps the OK button on the adjustment interface 12, to complete the adjustment of the display element, and obtain a phone icon 101*y*, a messaging icon 102*y*, a browser icon 103*y*, and a camera icon 104*y*, as shown in FIG. 14(e).

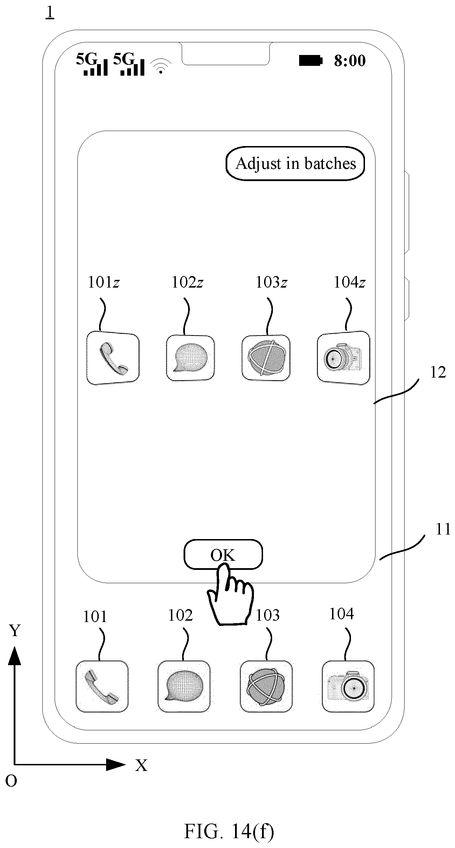

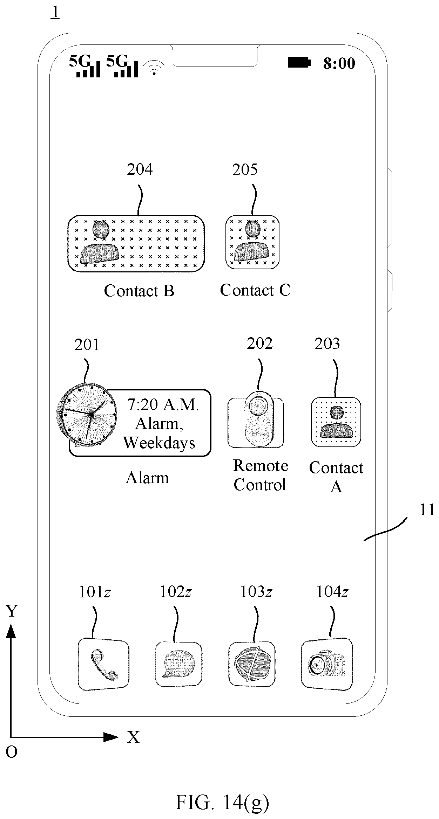

It can be learned from FIG. 14(e) that, compared with the phone icon 101, the messaging icon 102, the browser icon 103, and the camera icon 104 in FIG. 14(d), display directions of foreground elements of the phone icon 101*y*, the messaging icon 102*y*, the browser icon 103*y*, and the camera icon 104*y* change. In some other implementations, when the display direction of the icon is adjusted, the display direction of the foreground element and the display direction of the background element may further be simultaneously adjusted. For example, after the user touches a reference location on the display interface 12 in FIG. 14(d), the display directions of the phone icon 101, the messaging icon 102, the browser icon 103, and the camera icon 104 on the adjustment interface 12 are respectively adjusted based on the locations thereof and the reference location. As shown in FIG. 14(f), display directions of respective foreground elements and display directions of respective background elements of the phone icon 101, the messaging icon 102, the browser icon 103, and the camera icon 104 all change. The user touches the OK button in FIG. 14(f) to complete the adjustment of the display element, to obtain a phone icon 101*z*, a messaging icon 102*z*, a browser icon 103*z*, and a camera icon 104*z*, as shown in FIG. 14(g). In addition, in another implementation, the display direction of the background element can alternatively be separately adjusted. Because display effect is similar to that in FIG. 14(d) to FIG. 14(g), details are not described herein again.

It may be understood that, in the solutions shown in FIG. 14(f) and FIG. 14(g), adjustment amplitudes of the display direction of the foreground element and the display direction of the background element may be the same or may be different. This is not specifically limited in this application.

In conclusion, not only the batch adjustment can implement a simultaneous adjustment of the foreground element and the background element, but various types of the touch operations such as separately adjusting a display element, exchanging display locations of two display elements, adjusting display sizes of two adjacent display elements, and using one display element to cover another display element all can also implement the adjustment of at least one piece of display effect of at least one of the foreground element, the background element, and the text element. Details are not described herein in this application.

After the adjustment solution for the display direction of the display element is described, the following describes in detail a human-computer interaction solution between two display elements. Only a display element whose display direction is adjusted has a direction attribute. Based on this, the following describes the human-computer interaction solution between two display elements by using an example in which directions of all display elements on a display interface of a mobile phone 1 have been adjusted.

It may be understood that the two display elements may be display elements of a same type. For example, the two display elements are both cards. The two display elements may be cards of a same type, or may be cards of different types. Alternatively, the two display elements are both icons. Alternatively, the two display elements may be display elements of different types. For example, one display element is a card, and the other display element is an icon.

In some application scenarios, in an early touch operation, a last display direction adjustment of a contact A card 203 is performed after a last display direction adjustment of a contact B card 204, and a manner of the last display direction adjustment of the contact A card 203 is a batch adjustment. In a current touch operation, a touch trajectory in touch parameters is located in areas in which the two display elements are located, the two display elements correspond to a same application, and start point coordinates and end point coordinates are separately located in the areas in which the two display elements are located. In this case, a type of a touch operation corresponding to the touch operation is a process of using one display element to cover the other display element.

For example, as shown in FIG. 6(a), the application is "Contacts", and the display elements include the contact A card 203 and the contact B card 204. The following describes an update human-computer interaction solution between two display elements corresponding to a same application by using an example in which the contact B card 204 covers the contact A card 203.

When a user touches the contact B card 204 and drags the contact B card 204 onto the contact A card 203, the mobile phone 1 obtains first location information of the contact A card 203. Then, the mobile phone 1 obtains second display information of the contact B card 204, where the second display information includes second location information of the contact B card 204. The mobile phone 1 replaces the second location information in the second display information with the first location information to obtain third display information. The mobile phone 1 disposes a matrix corresponding to the third display information to the canvas, to complete drawing of a new icon, that is, a contact B card 204a, by using the canvas. Further, as shown in FIG. 6(b), the mobile phone 1 updates a contact B icon 203 to the contact B card 204a, hides the contact B card 204, and displays the contact A card 203. Location information includes a location parameter, a size parameter, a direction parameter, and the like that are used to determine the contact A card 203. For example, as shown in FIG. 6(c), the application is "Contacts", and the display elements include the contact A card 203 and a contact C card 205. The user touches the contact B card 204 and drags the contact B card 204 to the contact A card 203. The following describes an interaction solution for two display elements corresponding to a same application by using an example in which the contact C card 205 covers the contact A card 203. The mobile phone 1 obtains the first location information of the contact A card 203. Then, the mobile phone 1 obtains second display information of the contact C card 205, where the second display information includes second location information of the contact C card 205. The mobile phone 1 replaces the second location information in the second display information with the first location information to obtain third display information. Further, as shown in FIG. 6(d), the mobile phone 1 disposes a matrix corresponding to the third display information to the canvas, to complete drawing of a new icon, that is, a contact A icon 204a, by using the canvas. The mobile phone 1 updates the contact B icon 203 to the contact A icon 204a, hides the contact A icon 205, and displays the contact A card 203. In some application scenarios, in an early touch operation, both manners of a last display direction adjustment of an alarm card 201 and a last display direction adjustment of a remote control card 202a are batch adjustments, and are not limited to a same batch adjustment. In a current touch operation, two display elements correspond to different applications. In the touch parameters, the start point coordinates are in an area in which one display element is located, and the end point coordinates are in an area in which the other display element is located. In this case, the type of the touch operation corresponding to the touch operation is exchanging locations of the display elements corresponding to the two different applications.

For example, as shown in FIG. 7(a), one display element is the alarm card 201, and the other display element is a remote control card 202. The user touches the alarm card 201, and drags the alarm card 201 onto the remote control card 202. The following describes the interaction solution for two display elements corresponding to different applications by using an example in which the locations of the alarm card 201 and the remote control card 202 are exchanged with each other, and both the manners of the last display direction adjustment of the alarm card 201 and the last display direction adjustment of the remote control card 202a are the batch adjustments.

The mobile phone 1 obtains first display information of the alarm card 201, where the first display information includes first location information corresponding to the alarm card 201. The mobile phone 1 obtains second display information of the remote control card 202, where the second display information includes second location information corresponding to the remote control card 202. It may be understood that the remote control card 202 includes a text element related to a remote control. Because a size of the remote control card 202 is small, the text element of the remote control card 202 is not displayed. Because a text element related to an alarm is displayed on the alarm card 201, the obtained second location information includes a display location that should correspond to the text element in the remote control card 202.

The mobile phone 1 replaces the first location information in the first display information with the second location information to obtain third display information, and simultaneously replaces the second location information in the second display information with the first location information to obtain fourth display information. The mobile phone 1 generates, based on the third display information, the remote control card 202a after a location exchange, and generates, based on the fourth display information, an alarm card 201a after the location exchange. It may be understood that the first location information includes a location parameter that is used to determine a location of the remote control card 202, a location of the alarm card 201, and a relative location between the remote control card 202 and the alarm card 201, a size parameter, and a direction parameter. The mobile phone 1 displays the alarm card 201a and the remote control card 202a, and hides the alarm card 201 and the remote control card 202.

In some other human-computer interaction solutions, because the applications are different, sizes occupied by elements corresponding to the two cards cannot be completely the same. Therefore, the mobile phone 1 may further adaptively adjust the third display information and the fourth display information, to obtain a card that meets a use habit of the user.

In some other human-computer interaction solutions, a manner of the last display direction adjustment of the alarm card 201 is a separate adjustment. A manner of the last display direction adjustment of the remote control card 202 is a batch adjustment. The locations of the alarm card 201 and the remote control card 202 are exchanged with each other. When the last display direction adjustment of the alarm card 201 is later than the last display direction adjustment of the remote control card 202, a display direction of the alarm card 201a after the location exchange is unchanged, and a display direction of the remote control card 202a after the location exchange is unchanged.

In some other human-computer interaction solutions, the manner of the last display direction adjustment of the alarm card 201 is the separate adjustment. The manner of the last display direction adjustment of the remote control card 202 is the batch adjustment. The locations of the alarm card 201 and the remote control card 202 are exchanged with each other. When the last display direction adjustment of the alarm card 201 is earlier than the last display direction adjustment of the remote control card 202, a display direction of the remote control card 202 follows the display direction of the alarm card 201a after the location exchange, and the display direction of the remote control card 202a after the location exchange is unchanged. "Earlier than" means that an adjustment moment of a display element is earlier than an adjustment moment of a display element Y, and "later than" means that the adjustment moment of the display element is later than the adjustment moment of the display element Y

It may be understood that an adjustment moment of a display direction of the display element X is an adjustment moment corresponding to a current display direction of the display element X, and is not necessarily a moment at which the display element X is adjusted to the display direction. For example, the user separately adjusts the display direction of the display element X at a moment 111. In this case, the adjustment moment of the display direction of the display element X is the moment 111. For another example, the user adjusts, in batches, display directions of the display element X and a display element Z at a moment t21. In this case, the adjustment moment of the display direction of the display element X is the moment t21. For another example, the user adjusts, in batches, the display directions of the display element Y and the display element Z at a moment t31, and the display direction of the display element Y continues to be used for the display element X at a moment t32. In this case, the adjustment moment of the display direction of the display element X is the moment t31.

In some application scenarios, two display elements correspond to different applications. In the touch parameters, the start point coordinates are located outside areas in which two adjacent display elements are located, and are located at a location between the areas in which the two display elements are located, and the end point coordinates are located in the area in which one of the display elements is located. In this case, the type of the touch operation corresponding to the touch operation is adjusting sizes of the two adjacent display elements corresponding to different applications.

For example, as shown in FIG. 8(a), one display element is the alarm card 201a, and the other display element is the remote control card 202a. The user touches an area between the remote control card 202a and the alarm card 201a, and drags to the area in which the alarm card 201a is located. The following describes another update human-computer interaction solution for two display elements corresponding to different applications by using an example of adjusting sizes of the remote control card 202 and the alarm card 201.

The mobile phone 1 obtains first cropping information and first location information of the remote control card 202a. The mobile phone 1 obtains second cropping information and second location information of the alarm card 201a. The mobile phone 1 respectively adjusts the first cropping information, the second cropping information, and the second location information based on the touch parameters of the user. The mobile phone 1 adjusts a rotation angle of a foreground element in the alarm card 201a based on the touch parameters of the user. The mobile phone 1 adjusts the first location information of the remote control card 202a based on adjusted first cropping information, and adjusts the second location information of the alarm card 201a based on adjusted second cropping information and adjusted second location information. The mobile phone 1 updates the remote control card 202a based on the adjusted first cropping information and adjusted first location information, and updates the alarm card 201a based on the adjusted second cropping information and the adjusted second location information.

In some implementations, when the display element on the display interface of the mobile phone 1 is adjusted from another size to a minimum unit size, the display direction of the display element is adjusted to face a front side by default. It may be understood that although the display direction of the display element is adjusted to face the front side, it is still considered that the display element is a display element whose display direction has been adjusted.

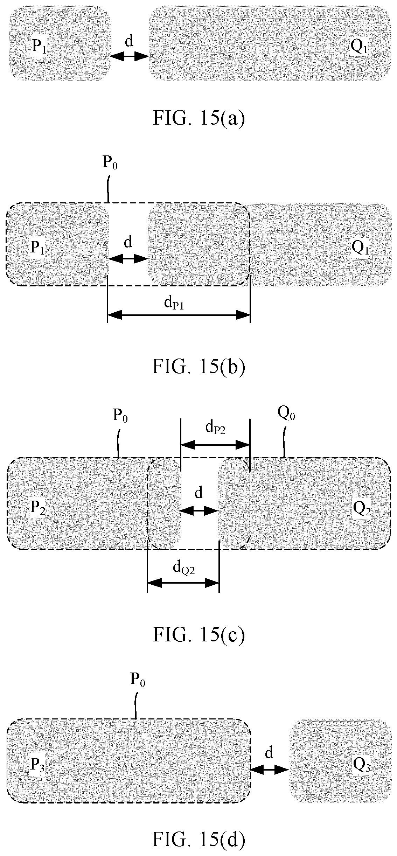

The following describes in detail, with reference to FIG. 15(a) to FIG. 15(d), an update solution for adjusting a background element P₁ of the remote control card 202a and a background element Q₁ of the alarm card 201a based on a touch trajectory. As shown in FIG. 15(a), a shortest distance between the background element P₁ corresponding to the remote control card 202a and the background element Q₁ of the alarm card 201a is d. As shown in FIG. 15(b), when the user touches an area between the background element P₁ and the background element Q₁, the background element P₁ is expanded to a contour P₀ of a maximum size at which the background element P₁ can be presented when the background element Q₁ is in a minimum size. As shown in FIG. 15(c), when the user drags from a start location of the touch to the background element Q₁, the mobile phone 1 generates cropping information d_{P2} and intermediate cropping information d_{Q2} based on an actual touch location of the user, draws an intermediate element P₂ based on the cropping information d_{P2}, and draws an intermediate element Q₂ based on the intermediate cropping information d_{Q2}. As shown in FIG. 15(d), when the user drags to an end location, the mobile phone 1 generates the first cropping information and the second cropping information based on the end location of the user, draws an updated background element P₃ based on the first cropping information, and draws an updated background element Q₃ based on the second cropping information.

In some implementations, the mobile phone 1 adjusts, based on adjustment parameters corresponding to the adjusted first cropping information and the adjusted first location information, matrices corresponding to the remote control card 202a. For example, the mobile phone 1 adjusts, based on the first cropping information, a matrix corresponding to a remote control background element in the remote control card 202a, and the mobile phone 1 adjusts, based on the first location information, a matrix corresponding to a remote control text element in the remote control card 202a. The mobile phone 1 disposes a matrix corresponding to an adjusted remote control background element and a matrix corresponding to an adjusted remote control text element to the canvas, so that the canvas displays an adjusted remote control card 202b. Similarly, the mobile phone 1 adjusts, based on adjustment parameters corresponding to the adjusted second cropping information and the adjusted second location information, matrices corresponding to the alarm card 201a. The mobile phone 1 disposes matrices corresponding to an adjusted alarm card 201a to the canvas, so that the canvas displays the adjusted alarm card 201b. At the same time, the mobile phone 1 hides the remote control card 202a and the alarm card 201a.

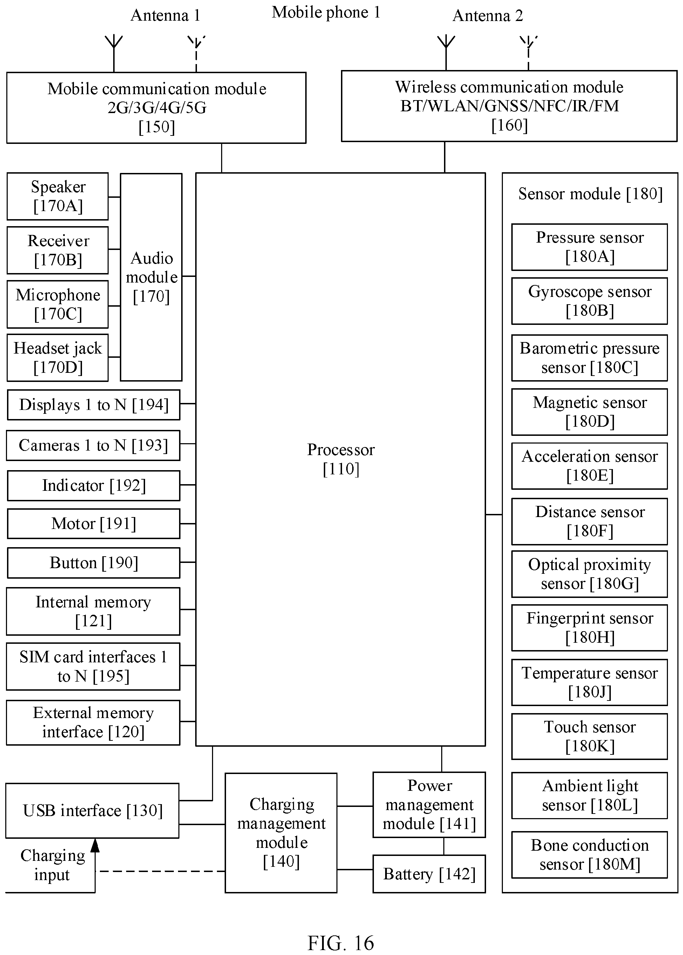

For example, FIG. 16 is a schematic diagram of a hardware structure of a mobile phone 1.

The mobile phone 1 may include a processor 110, an external memory interface 120, an internal memory 121, a universal serial bus (universal serial bus, USB) interface 130, an antenna 1, an antenna 2, a mobile communication module 150, a wireless communication module 160, an audio module 170, a speaker 170A, a receiver 170B, a microphone 170C, a headset jack 170D, a sensor module 180, and the like.

It may be understood that a structure illustrated in an embodiment of the present invention does not constitute a specific limitation on the mobile phone 1. In some other embodiments of this application, the mobile phone 1 may include more or fewer components than those shown in the figure, combine some components, split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and the like. Different processing units may be independent devices, or may be integrated into one or more processors.

A memory may further be disposed in the processor 110, and is configured to store instructions and data. In some embodiments, the memory in the processor 110 is a cache. The memory may store instructions or data recently used or cyclically used by the processor 110. If the processor 110 needs to use the instructions or data again, the processor 110 may directly invoke the instructions or data from the memory. This avoids repeated access, and reduces a waiting time of the processor 110, so that efficiency of a system is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the mobile phone 1 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone 1 may be configured to cover one or more communication frequency bands. Different antennas may further be multiplexed to improve antenna utilization. For example, the antenna 1 may be multiplexed as a diversity antenna of a wireless local area network. In some other embodiments, the antennas may be used in combination with a tuning switch.

The mobile communication module 150 may provide a solution, applied to the mobile phone 1, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a solution, applied to the mobile phone 1, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the mobile phone 1, the antenna 1 and the mobile communication module 150 are coupled, and the antenna 2 and the wireless communication module 160 are coupled, so that the mobile phone 1 may communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile phone 1 implements a display function by using the GPU, a display 194, the application processor, and the like. The GPU is a microprocessor for image processing and is connected to the display 194 and the application processor. The GPU is configured to perform mathematical and geometric calculation for graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the mobile phone 1 may include one or N displays 194, where N is a positive integer greater than 1.

The mobile phone 1 may implement a photographing function by using the ISP, a camera 193, the video codec, the GPU, the display 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone 1 may include one or N cameras 193, where N is a positive integer greater than 1. The digital signal processor is configured to process a digital signal, and may further process another digital signal in addition to the digital image signal. For example, when the mobile phone 1 selects a frequency, the digital signal processor is configured to perform Fourier transform on frequency energy, and the like.

The video codec is configured to compress or decompress a digital video. The mobile phone 1 may support one or more types of video codecs. In this way, the mobile phone 1 may play or record videos in a plurality of encoding formats, for example, moving picture experts group (moving picture experts group, MPEG)-1, MPEG-2, MPEG-3, and MPEG-4.

The external memory interface 120 may be configured to be connected to an external storage card, for example, a Micro SD card, to extend a storage capability of the mobile phone 1. The external storage card communicates with the processor 110 through the external memory interface 120 to implement a data storage function. For example, files such as music and a video are stored in the external storage card.

The internal memory 121 may be configured to store computer-executable program code, and the executable program code includes instructions. The processor 110 runs the instructions stored in the internal memory 121, to perform various functional applications and data processing of the mobile phone 1. The internal memory 121 may include a program storage area and a data storage area. The program storage area may store an operating system, an application required by at least one function (such as a voice playing function and an image playing function), and the like. The data storage area may store data (for example, audio data and an address book) and the like that are created during use of the mobile phone 1. In addition, the internal memory 121 may include a high-speed random access memory, and may further include a non-volatile memory, for example, at least one magnetic disk storage device, a flash memory device, and a universal flash storage (universal flash storage, UFS).

The mobile phone 1 may implement an audio function, for example, music playing or recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may further be configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The mobile phone 1 may be used to listen to music or answer a hand-free call by using the speaker 170A.

The receiver 170B, also referred to as an "earpiece", is configured to convert an audio electrical signal into a sound signal. When the mobile phone 1 receives a call or a voice message, the receiver 170B may be put close to a human ear to listen to a voice.

The microphone 170C, also referred to as a "mike" or a "mic", is configured to convert a sound signal into an electrical signal. When making a call or sending a voice message, a user may make a sound by moving a human mouth close to the microphone 170C, to input a sound signal to the microphone 170C. The mobile phone 1 may be provided with at least one microphone 170C. In some other embodiments, the mobile phone 1 may be provided with two microphones 170C, to collect a sound signal and further implement a noise reduction function. In some other embodiments, the mobile phone 1 may be alternatively provided with three, four, or more microphones 170C, to implement sound signal collection, implement noise reduction, and identify a sound source, to implement a directional recording function, and the like.

The headset jack 170D is configured to be connected to a wired headset. The headset jack 170D may be a USB port 130, or may be a 3.5 mm open mobile terminal platform (open mobile terminal platform, OMTP) standard interface or cellular telecommunications industry association of the USA (cellular telecommunications industry association of the USA, CTIA) standard interface. The sensor module 180 may include a touch sensor, a fingerprint device, a pressure sensor, a gyroscope sensor, a barometric pressure sensor, a magnetic sensor, an acceleration sensor, a distance sensor, an optical proximity sensor, a fingerprint sensor, a temperature sensor, an ambient light sensor, a bone conduction sensor, and the like.

The touch sensor is used as an example. The touch sensor may collect a touch event (for example, an operation performed by the user on a surface of the touch sensor by using any suitable object such as a finger or a stylus) of the user on or near the touch sensor, and send collected touch information to another device, for example, the processor 110. For example, the touch sensor may be implemented in a plurality of manners, such as a resistive type, a capacitive type, an infrared type, and a surface acoustic wave type. The touch sensor and the display 194 may be integrated into a touchscreen of the mobile phone 1, or the touch sensor and the display 194 may be used as two independent components to implement input and output functions of the mobile phone 1.

Certainly, the mobile phone 1 may further include a charging management module, a power management module, a battery, a button, an indicator, one or more SIM card interfaces, and the like. This is not limited in embodiments of this application.

A software system of the mobile phone 1 may use a layered architecture, an event-driven architecture, a microkernel architecture, a microservice architecture, or a cloud architecture. In an embodiment of this application, an Android system of a layered architecture is used as an example to describe the software structure of the mobile phone 1.

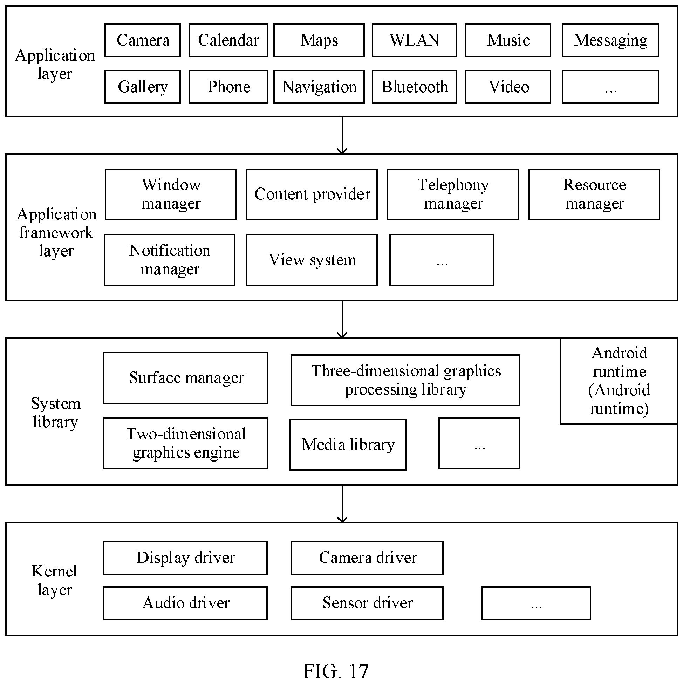

FIG. 17 is a block diagram of a software structure of a mobile phone 1 according to an embodiment of this application.

In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

### 1. Application layer

The application layer may include a series of applications.

As shown in FIG. 17, the applications may be applications (applications, APPs) such as "Phone", "Contacts", "Camera", "Gallery", "Calendar", "Maps", "Navigation", "Bluetooth", "Music", "Video", and "Messaging".

Still as shown in FIG. 17, the application layer further includes an Android core application such as a launcher (launcher, which may also be referred to as a desktop or a home screen). Generally, after the Android system is started, the launcher may be used as a core application to permanently run in the Android system.

The launcher may be used to display and manage other apps installed at the application layer. As shown in FIG. 17, an application icon of an application is generally displayed in the launcher, and is managed by the launcher in a unified manner. If it is detected that the user performs an operation such as tapping, touching and holding, or dragging on an application icon in the launcher, the launcher may respond to the user operation, and trigger a corresponding application to execute a corresponding operation instruction. For example, if it is detected that the user taps a contact card in the launcher, the launcher may generate a start message of the application "Contacts", start an application process of the application "Contacts" by invoking a related service at the application framework layer, and finally display an interface of the application "Contacts" on the screen. For another example, if it is detected that the user touches and holds the contact card in the launcher, the launcher may generate a contact card adjustment message, and a contact card adjustment interface is displayed.

When displaying a display element of each application, the launcher may obtain a display model provided by the application, for example, a three-dimensional display model corresponding to a foreground element 110 in FIG. 9(a), and for another example, two-dimensional display models corresponding to a background element 120 and a text element 130. The application "Contacts" is used as an example. An installation package of the application "Contacts" may provide a display model corresponding to a contact card. The display model is used to map each sub-display element in the contact card. As shown in FIG. 9(d), the contact card includes the foreground element 110, the background element 120, and the text element 130. The foreground element 110 and the text element 130 are generally located above the background element 120, and sizes of the foreground element 110 and the text element 130 are generally smaller than a size of the background element 120.

When the launcher displays the contact card, the launcher may obtain, from the installation package of the application "Contacts", the display model corresponding to the application "Contacts". As shown in FIG. 10, after a touch operation of the user is received by using a touch sensor on the screen, the launcher obtains a type of the touch operation of the user, and determines adjustment parameters and adjustment variables based on the type of the touch operation. Then, the launcher adjusts, based on the adjustment parameters and the adjustment variables, a matrix corresponding to the corresponding sub-display element. To display, by using the launcher, a card corresponding to a user requirement, the launcher crops the background element 120 by using a canvas, so that the background element 120 is presented at a preset shape and size. Further, as shown in FIG. 9(c), the launcher may superimpose the foreground element 110 and the text element 130 on a cropped background element 120, to finally form a contact card 100. For each to-be-displayed display element, the launcher may produce, based on the foregoing method and by using the canvas, a display element corresponding to the touch operation of the user. In this way, the launcher can flexibly adjust, by using the canvas, display effect that is of each display element in the mobile phone and that is in the launcher, to improve diverse and personalized customization of application icons in the launcher. In addition, an icon 200 displayed on the launcher includes a foreground element 210 and a background element 220. A specific adjustment manner is the same as an adjustment manner of the foregoing card 100. Details are not described herein again.

When displaying an application icon of each application, the launcher may obtain a display model provided by the application. The application "Contacts" is used as an example. The installation package of the application "Contacts" may provide a contact-related display model.

### 2. Application framework layer

The application framework layer provides an application programming interface (application programming interface, API) and a programming framework for an application at the application layer. The application framework layer includes some predefined functions.

For example, the application framework layer may include a notification manager, an activity manager, a window manager, a content provider, a view system, a telephony manager, and the like. The view system (view) may be configured to construct a display interface of an application. Each display interface may include one or more controls. Generally, the controls may include interface elements such as an icon, a button, a menu, a tab, a text box, a dialog box, a status bar, a navigation bar, and a widget (widget).

The notification manager enables an application to display notification information in the status bar, and may be configured to convey a notification-type message that may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on the screen in a form of a dialog window. For example, text information is prompted in the status bar, an alert sound is played, the electronic device vibrates, or indicator light blinks.

In addition, the activity manager may be configured to manage a lifecycle of each application. The application usually runs in an operating system in a form of an activity. The activity manager may schedule an activity process of the application to manage the lifecycle of each application. The window manager is configured to manage a window program.

The window manager may obtain a size of a display, determine whether there is a status bar, perform screen locking, take a screenshot, and the like.

The content provider is configured to store and obtain data, and make the data accessible to an application. The data may include a video, an image, audio, calls that are made and answered, a browsing history and bookmarks, an address book, and the like.

The telephony manager is configured to provide a communication function of the mobile phone, for example, management of a call status (including answering, declining, or the like). The resource manager provides various resources for an application, such as a localized character string, an icon, a picture, a layout file, and a video file.

### 3. Android runtime and system library

The Android runtime includes a core library and a virtual machine. The Android runtime is responsible for scheduling and management of the Android system.

The core library includes two parts: a function that needs to be invoked by a Java language and a core library of Android.

The application layer and the application framework layer run on a virtual machine. The virtual machine executes Java files of the application layer and the application framework layer as binary files. The virtual machine is configured to implement functions such as object lifecycle management, stack management, thread management, security and abnormality management, and garbage collection.

The system library may include a plurality of functional modules, for example, a surface manager (surface manager), a media library (media library), a three-dimensional graphics processing library (for example, an OpenGL ES), and a 2D graphics engine (for example, an SGL).

The surface manager is configured to manage a display subsystem, and provide fusion of 2D and 3D layers for a plurality of applications. The media library supports playback and recording in a plurality of commonly used audio and video formats, static image files, and the like. The media library may support a plurality of audio and video encoding formats such as MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

### 4. Kernel layer

The kernel layer is a layer between hardware and software. The kernel layer includes at least a display driver, a camera driver, an audio driver, a sensor driver, and the like. This is not limited in embodiments of this application.

In this application, an example in which a card corresponding to each application displayed in the launcher includes three sub-display elements is used. The three sub-display elements include a foreground element in a foreground element layer, a background element in a background element layer, and a text element in a text layer. The launcher may change display effect of the card by changing at least one of the foreground element layer, the background element layer, and the text layer.

Embodiments of a mechanism disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code may be used to input instructions, to perform functions described in this application and generate output information. The output information may be applied to one or more output devices in a known manner. For a purpose of this application, a processing system includes any system that has a processor such as a digital signal processor (digital signal processor, DSP), a microcontroller, an application-specific integrated circuit (application-specific integrated circuit, ASIC), or a microprocessor.

The program code may be implemented by using a high-level procedural language or an object-oriented programming language, to communicate with the processing system. The program code may alternatively be implemented by using an assembly language or a machine language when needed. Actually, the mechanism described in this application is not limited to a scope of any particular programming language. In any case, the language may be a compiled language or an interpretive language.

In some cases, the disclosed embodiments may be implemented by hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed through a network or another computer-readable medium. Therefore, the machine-readable medium may include any mechanism for storing or transmitting information in a machine-readable (for example, a computer-readable) form. The machine-readable medium includes but is not limited to a floppy disk, a compact disc, an optical disc, a compact disc read-only memory (CD-ROM), a magnetooptical disc, a read-only memory (read-only memory, ROM), a random access memory (random access memory, RAM), an erasable programmable read-only memory (erasable programmable read-only memory, EPROM), an electrically erasable programmable read-only memory (electrically erasable programmable read-only memory, EEPROM), a magnetic or an optical card, a flash memory, or a tangible machine-readable memory that is configured to transmit information (for example, a carrier, an infrared signal, or a digital signal) by using a propagating signal in an electrical, optical, acoustic, or another form over the Internet. Therefore, the machine-readable medium includes any type of machine-readable medium that is suitable for storing or transmitting electronic instructions or information in a machine-readable (for example, a computer-readable) form.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that in the examples and the specification of this patent, relational terms such as "first" and "second" are used only to distinguish an entity or operation from another entity or operation, and do not require or imply that any actual relationship or sequence exists between these entities or operations. Moreover, terms "include", "contain", or any other variants thereof are intended to cover a non-exclusive inclusion, so that a process, a method, an article, or a device that includes a series of elements not only includes those elements, but also includes other elements which are not expressly listed, or further includes elements inherent to this process, method, article, or device. An element preceded by a statement "includes a/an" does not, without more constraints, exclude the presence of additional identical elements in the process, method, article, or device that includes the element.

Although this application has been illustrated and described with reference to some preferred embodiments of this application, a person of ordinary skill in the art should understand that various changes may be made to this application in form and detail without departing from the spirit and scope of this application.

## Claims

1. A human-computer interaction method, applied to an electronic device and comprising:
obtaining a touch operation performed by a user on at least one display element displayed on the electronic device;
adjusting, based on a type of the touch operation, display effect of at least one display model of the at least one display element to which the touch operation is applied; and
changing, based on the display model whose display effect is adjusted, display effect of the display element corresponding to the display model on the electronic device.

2. The method according to claim 1, wherein the at least one piece of display effect comprises at least one of a display location, a display size, a display direction, a display color, display content, and a display detail of the display element.

3. The method according to claim 1, wherein the method further comprises:
determining the type of the touch operation according to a preset rule, wherein the preset rule is set based on a quantity of the at least one display element, whether the at least one display element corresponds to a same application, and the touch operation.

4. The method according to claim 1, wherein the obtaining a touch operation performed by a user on at least one display element displayed on the electronic device comprises:
when the user selects to adjust display effect of a plurality of display elements, the touch operation is used to simultaneously adjust the display effect of the plurality of selected display elements.

5. The method according to claim 4, wherein the adjusting, based on a type of the touch operation, display effect of at least one display model of the at least one display element to which the touch operation is applied comprises:
performing different display effect adjustments on display models of at least two display elements in the plurality of display elements based on the type of the touch operation.

6. The method according to claim 5, wherein the performing different display effect adjustments on display models of at least two display elements in the plurality of display elements comprises:
determining, based on the touch operation of the user and a display location of each of the at least two display elements, a sub-touch operation performed by the user on each display element; and
determining a rotation axis, a rotation direction, and a rotation angle of each display element based on the sub-touch operation, and adjusting, in correspondence to the touch operation, a display direction of each display element based on the determined rotation axis, rotation direction, and rotation angle of each display element.

7. The method according to claim 4, wherein the adjusting, based on a type of the touch operation, display effect of at least one display model of the at least one display element to which the touch operation is applied comprises:
performing a same display direction adjustment on a plurality of display models of the plurality of display elements based on the type of the touch operation.

8. The method according to any one of claims 1 to 7, wherein the operation type comprises using a first display element to cover a second display element, wherein the first display element and the second display element correspond to a same application, and the using a first display element to cover a second display element comprises using, in the first display element, second at least partial display effect of the second display element, and hiding the second display element, wherein the second at least partial display effect comprises a second display location and a second display size of the second display element.

9. The method according to claim 8, wherein when a display direction of the second display element is obtained based on a batch adjustment, and a display direction adjustment of the second display element is not earlier than a display direction adjustment of the first display element, the second at least partial display effect further comprises a second display direction of the second display element.

10. The method according to claim 8 or 9, wherein the adjusting, based on a type of the touch operation, display effect of at least one display model of the at least one display element to which the touch operation is applied comprises:
obtaining the second display element corresponding to the touch operation of the user; and
adjusting a display model of the first display element based on the at least partial display effect of the second display element, hiding, in correspondence to the touch operation, the second display element, and adjusting display effect of the first display element by using an adjusted display model.

11. The method according to any one of claims 4 to 6, wherein the type of the touch operation comprises exchanging display locations of a third display element and a fourth display element, and when a type of a latest touch operation performed on the third display element is adjusting, in batches, display directions, and a display direction adjustment of the third display element is not earlier than a display direction adjustment of the fourth display element, the exchanging display locations of a third display element and a fourth display element comprises:
using, in the third display element, fourth at least partial display effect of the fourth display element, and using, in the fourth display element, third at least partial display effect of the third display element, wherein the fourth at least partial display effect comprises a fourth display location of the fourth display element, and the third at least partial display effect comprises a third display location and a third display direction of the third display element.

12. The method according to any one of claims 4 to 6, wherein the type of the touch operation comprises exchanging display locations of a third display element and a fourth display element, and when a type of a latest touch operation performed on the third display element and a type of a latest touch operation performed on the fourth display element are both adjusting, in batches, display directions, the exchanging display locations of a third display element and a fourth display element comprises:
using, in the third display element, fourth at least partial display effect of the fourth display element, and using, in the fourth display element, third at least partial display effect of the third display element, wherein the third at least partial display effect comprises a third display location and a third display direction of the third display element, and the fourth at least partial display effect comprises a fourth display location and a fourth display direction of the fourth display element.

13. The method according to claim 1, wherein the type of the touch operation comprises synchronously adjusting display effect of a fifth display element and a sixth display element, the fifth display element and the sixth display element are adjacently displayed on the electronic device, and the synchronously adjusting display effect of a fifth display element and a sixth display element comprises:
synchronously adjusting a fifth display size of the fifth display element and a sixth display size of the sixth display element based on the touch operation, wherein a sum of the fifth display size and the sixth display size remains unchanged.

14. The method according to claim 13, wherein the synchronously adjusting display effect of a fifth display element and a sixth display element further comprises:
adjusting fifth display content of the fifth display element and/or display content of the sixth display element based on the touch operation.

15. The method according to claim 13, wherein when a size that is of the fifth display element and that is adjusted based on a fifth adjustment size is a minimum display size, the synchronously adjusting display effect of a fifth display element and a sixth display element further comprises adjusting a fifth display direction of the fifth display element.

16. The method according to claim 13, wherein the method further comprises:
during the touch operation of the user, obtaining a corresponding fifth real-time size and a corresponding sixth real-time size based on a touch location of the user, wherein a sum of the fifth real-time size and the sixth real-time size remains unchanged; and
adjusting the display effect of the fifth display element in real time based on the fifth real-time size, and adjusting the display effect of the sixth display element in real time based on the sixth real-time size.

17. The method according to any one of claims 1 to 16, wherein the changing, based on the display model whose display effect is adjusted, display effect of the display element corresponding to the display model on the electronic device comprises:
drawing, by using a canvas, the display model whose display effect is adjusted, to change the display effect of the display element corresponding to the display model on the electronic device.

18. The method according to claim 1, wherein the type of the touch operation comprises adjusting a display direction of the display element, and the adjusting a display direction of the display element comprises determining a rotation axis, a rotation direction, and a rotation angle of the display element.

19. The method according to claim 18, wherein the adjusting, based on a type of the touch operation, display effect of at least one display model of the at least one display element to which the touch operation is applied comprises:
determining a rotation axis, a rotation direction, and a rotation angle of the display model of the display element based on the touch operation of the user, and adjusting, in correspondence to the touch operation, the display direction of the display element based on the determined rotation axis, rotation direction, and rotation angle.

20. The method according to any one of claims 1 to 10, wherein the at least one display element comprises at least one of an icon, a card, and a widget.

21. The method according to any one of claims 1 to 20, wherein each of the at least one display element comprises a foreground element and a background element, and the method further comprises:
adjusting, based on the type of the touch operation, display effect of the foreground element and/or the background element corresponding to at least one sub-display element in the at least one display element to which the touch operation is applied.

22. The method according to any one of claims 1 to 21, wherein the display model comprises at least one of a two-dimensional display model and a three-dimensional display model.

23. A computer-readable medium, wherein the computer-readable medium stores instructions, and when the instructions are executed on an electronic device, the electronic device is enabled to perform the human-computer interaction method according to any one of claims 1 to 22.

24. An electronic device, comprising:
a memory, configured to store instructions executed by one or more processors of the electronic device; and
a processor that is one of processors of the electronic device and that is configured to perform the human-computer interaction method according to any one of claims 1 to 22.
